# EUROPEAN PATENT APPLICATION

(11) **EP 4 773 351 A1**
(43) Date of publication of application: **08.07.2026**
(21) Application number: 24883731.2
(22) Date of filing: 04.02.2024
(51) Int. Cl.: H01M 50/102, H01M 50/134, H01M 10/04, H01M 10/0525, H01M 10/613

(54) **BATTERY CELL, BATTERY, AND ELECTRICAL DEVICE**

(30) Priority: 03.11.2023 CN 202311458313
(71) Applicant: Contemporary Amperex Technology Co., Limited, Ningde, Fujian 352100 (CN)
(72) Inventor: HAN, Shuanghui, Ningde, Fujian 352100 (CN); HUANG, Jiansong, Ningde, Fujian 352100 (CN)
(74) Representative: Ziebig Hengelhaupt Intellectual Property Attorneys Patentanwaltskanzlei PartGmbB
(86) International application number: PCT/CN2024/075847
(87) International publication number: WO 2025/091714

(57) **Abstract**

The present application provides a battery cell, a battery, and an electrical device. The battery cell includes a casing and an electrode assembly. The casing includes a first casing wall and a second casing wall which are oppositely arranged in a first direction, and an area of a second outer surface of the second casing wall is smaller than or equal to an area of a first outer surface of the first casing wall. The electrode assembly is accommodated in the casing and includes a body part and a first tab, the body part is located between the first casing wall and the second casing wall in the first direction, the first tab extends out from at least one end of the body part in a second direction, and the second direction intersects with the first direction. A distance between the first casing wall and the second casing wall in the first direction is D₁ mm, the area of the second outer surface of the second casing wall is S mm², and S is 36 to 500 times the square of D₁.

## Description

### CROSS-REFERENCE TO RELATED APPLICATIONS

The present application claims priority to Chinese Patent Application No. 202311458313.7, filed on November 3, 2023 and entitled "Battery Cell, Battery, and electrical device", which is incorporated herein by reference in its entirety.

### TECHNICAL FIELD

The present application relates to the field of batteries, and in particular, to a battery cell, a battery, and an electrical device.

### BACKGROUND

Battery cells are widely used in electronic devices such as mobile phones, laptops, electric bicycles, electric vehicles, electric aircraft, electric ships, electric toy cars, electric toy ships, electric toy aircraft, and electric tools.

In the development of battery technology, improving the cycle performance of battery cells is a research direction in the field of battery technology.

### SUMMARY

The present application provides a battery cell, a battery, and an electrical device, which enable the battery cell to have both good heat dissipation efficiency and good rigidity and structural strength, thereby improving the cycle performance of the battery cell.

In a first aspect, the present application provides a battery cell, including a casing and an electrode assembly. The casing includes a first casing wall and a second casing wall which are oppositely arranged in a first direction, and an area of a second outer surface of the second casing wall is smaller than or equal to an area of a first outer surface of the first casing wall. The electrode assembly is accommodated in the casing and includes a body part and a first tab, the body part is located between the first casing wall and the second casing wall in the first direction, the first tab extends out from at least one end of the body part in a second direction, and the second direction intersects with the first direction. A distance between the first casing wall and the second casing wall in the first direction is D₁ mm, the area of the second outer surface of the second casing wall is S mm², and S is 36 to 500 times the square of D₁.

In embodiments of the present application, setting S to be 36 to 500 times the square of D₁ enables the battery cell to have both good heat dissipation efficiency and good rigidity and structural strength. Specifically, setting S to be greater than or equal to 36 times the square of D₁ improves the heat dissipation efficiency of the battery cell, reduces heat accumulation within the battery cell, lowers temperature rise during charge and discharge processes, and thereby improves cycle performance and cycle life of the battery cell. In the embodiments of the present application, setting S to be smaller than or equal to 500 times the square of D₁ improves the rigidity and structural strength of the battery cell, reduces deformation of the battery cell under external impact, and enhances the reliability of the battery cell.

In some embodiments, S/D₁² is from 45 to 175, which can further balance the cycle performance and reliability of the battery cell, reduce temperature rise of the battery cell, and reduce the risk of deformation of the battery cell.

In some embodiments, a dimension of the second casing wall in the second direction is D₂ mm, a dimension of the second casing wall in a third direction is D₃ mm, and the first direction, the second direction, and the third direction are mutually perpendicular. D₁, D₂ and D₃ satisfy: D₂>D₃>D₁.

The body part may be a primary factor determining a capacity of the battery cell. D₂ is related to the dimension of the body part in the second direction, and D₃ is related to the dimension of the body part in the third direction. The first tab extends from the end of the body part in the second direction, occupying additional space in the second direction but not in the third direction; the embodiments of the present application allow the body part to have a relatively large dimension in the second direction, thereby reducing a ratio of the dimension of the first tab in the second direction to the dimension of the body part in the second direction, improving space utilization, and enhancing energy density of the battery cell. D₁ being smaller than D₂ and D₃ shortens the heat transfer path, improves heat dissipation efficiency, and thereby improves the cycle performance and cycle life of the battery cell.

In some embodiments, D₂/D₃ is from 4 to 10.2; alternatively, D₂/D₃ is from 5 to 7. The embodiments of the present application can balance space utilization of the battery cell and the current-carrying capacity of the first tab, thereby improving space utilization and enhancing the energy density of the battery cell while ensuring that the current-carrying capacity of the first tab meets requirements.

In some embodiments, D₃/D₁ is 3-7; alternatively, D₃/D₁ is 3-5. The embodiments of the present application can improve the heat dissipation efficiency of the battery cell, reduce the temperature rise of the battery cell during charging and discharging, and improve the rigidity and structural strength of the battery cell, thereby reducing deformation of the battery cell when subjected to external impact and enhancing the reliability of the battery cell.

In some embodiments, D₂ is from 300 to 3000; alternatively, D₂ is from 500 to 1000. In the embodiments of the present application, D₂ being greater than or equal to 300 enables the battery cell to have a larger dimension in the second direction, thereby reducing the number of battery cells in the battery, simplifying the battery manufacturing process, and improving the energy density of the battery. D₂ being smaller than or equal to 3000 can reduce the difference in a conductive path between the two ends of the body part and the first tab, thereby reducing heat generation.

In some embodiments, the energy of the battery cell is 150×D₁×S×10⁻⁶ -600×D₁×S×10⁻⁶, with a unit of energy being Wh. The embodiments of the present application define the energy of the battery cell based on D₁×S, which can balance the heat dissipation efficiency and heat generation of the battery cell to some extent, reduce the temperature rise of the battery cell during charging and discharging, and improve the cycle performance of the battery cell.

In some embodiments, a thickness of the second casing wall is from 0.1 mm to 0.8 mm; alternatively, the thickness of the second casing wall is from 0.2 mm to 0.5 mm; further alternatively, the thickness of the second casing wall is 0.3 mm. The embodiments of the present application can balance the strength and weight of the second casing wall, improve the reliability of the battery cell, and enhance the energy density of the battery cell.

In some embodiments, the area of the second outer surface of the second casing wall is smaller than the area of the first outer surface of the first casing wall. The casing is provided at an end in the second direction with a first recess, the first recess being formed by the second casing wall recessing toward the first casing wall. In the first direction, at least a portion of the first tab is located between a bottom wall of the first recess and the first casing wall.

Since the first tab requires less space in the first direction, the first recess can be provided on the outer side of the casing, thereby reducing the volume of the battery cell and improving the volumetric energy density of the battery cell.

In some embodiments, the casing includes two third casing walls oppositely arranged in the third direction, each of the third casing walls being connected to the first casing wall and the second casing wall, the first direction, the second direction, and the third direction being mutually perpendicular. In the third direction, at least a portion of the first tab is located between the two third casing walls. in the third direction, a dimension of the first tab is L₁ mm, a distance between the two third casing walls is L₂ mm, and L₁/L₂ is from 0.2 to 0.9.

The embodiments of the present application define L₁/L₂ to be greater than or equal to 0.2 to increase current-carrying capacity of the first tab and reduce heat generation of the first tab. The embodiments of the present application define L₁/L₂ to be smaller than or equal to 0.9 to reduce the risk of short circuiting between the first tab and the third casing wall.

In some embodiments, L₁/L₂ is from 0.5 to 0.8, so as to further increase the current-carrying capacity of the first tab and reduce the risk of short circuiting between the first tab and the third casing wall.

In some embodiments, in the third direction, the dimension of the body part is L₃ mm, and L₃/L₂ is from 0.9 to 0.99; alternatively, L₃/L₂ is from 0.95 to 0.98.

The embodiments of the present application can improve the space utilization of the body part in the third direction and reduce the difficulty of inserting the body part between the two third casing walls.

In some embodiments, the battery cell further includes a first electrode lead-out piece arranged on the first casing wall and electrically connected to the first tab. At least a portion of the first electrode lead-out piece is located outside the first casing wall; in the first direction, a projection of the portion of the first electrode lead-out piece located outside the first casing wall at least partially overlaps with a projection of the first recess.

When a plurality of battery cells are arranged in the first direction, the first recess of one battery cell can provide clearance for the first electrode lead-out piece of another battery cell, thereby improving space utilization and enhancing energy density of the battery.

In some embodiments, the battery cell further includes a first electrode lead-out piece arranged on the first casing wall, the first electrode lead-out piece including the first connecting plate accommodated in the casing, at least a portion of the first tab being stacked and connected with the first connecting plate in the first direction. In the third direction, the dimension of the first tab is L₁ mm, the dimension of the first connecting plate is L₄ mm, and L₁/L₄ is from 0.6 to 1; alternatively, L₁/L₄ is from 0.8 to 0.9. The first direction, the second direction, and the third direction are mutually perpendicular.

The embodiments of the present application define L₁/L₄ to be greater than or equal to 0.6 to increase an connection area between the first tab and the first connecting plate, improve the current-carrying capacity between them, and reduce temperature rise. The embodiments of the present application define L₁/L₄ to be smaller than or equal to 1 to reduce space waste caused by the first tab and improve space utilization.

In some embodiments, the battery cell further includes a first electrode lead-out piece provided on the first casing wall. The first electrode lead-out piece includes a first connecting plate, a second connecting plate, a third connecting plate, a first electrode terminal, and a first terminal plate. The first connecting plate is accommodated in the casing, at least a portion of the first tab is located on a side of the first connecting plate faced away from the first casing wall and is connected to the first connecting plate. The second connecting plate extends from an end of the first connecting plate adjacent to the body part toward the first casing wall. The third connecting plate is connected to an end of the second connecting plate away from the first connecting plate and is located between the first casing wall and the first connecting plate. The first electrode terminal is connected to the third connecting plate and passes through the first casing wall. The first terminal plate is located on a side of the first casing wall faced away from the first tab and is connected to the first electrode terminal.

By providing the first terminal plate, electrical connection with external conductive structures is facilitated, thereby improving the current-carrying capacity.

In some embodiments, in the first direction Z, the projection of the first terminal plate is located within the projection of the first recess.

When a plurality of battery cells are arranged in the first direction, the first recess of one battery cell can provide clearance for the first terminal plate of another battery cell, thereby improving space utilization and enhancing energy density of the battery.

In some embodiments, the first terminal plate includes a first terminal portion and a second terminal portion, the first terminal portion being connected to the first electrode terminal, the second terminal portion protruding from a surface of the first terminal portion faced away from the first casing wall. Both the first terminal portion and the second terminal portion can be used to connect to the busbar component; by providing the second terminal portion, a connection area between the first terminal plate and the busbar component is increased.

In some embodiments, the battery cell further includes an insulating bracket accommodated in the casing and provided with the body part in the second direction. A first accommodating recess is provided on a side of the insulating bracket facing the body part. At least a portion of the first tab extends into the first accommodating recess and is bent within the first accommodating recess.

The wall of the first accommodating recess can guide the bending of the first tab, thereby reducing the space occupied by the first tab in the second direction, lowering the risk of contact between the first tab and the casing during bending, and improving reliability.

In some embodiments, the battery cell further includes a first electrode lead-out piece provided on the first casing wall. In the first direction, a portion of the insulating bracket is located between the first electrode lead-out piece and the first casing wall. The first electrode lead-out piece and the first casing wall can position the insulating bracket in the first direction, reducing the risk of the insulating bracket shaking inside the casing when the battery cell is subjected to external impact.

In some embodiments, the battery cell further includes the first electrode lead-out piece and an insulating member, where the first electrode lead-out piece is provided on the first casing wall and electrically connected to the first tab, and the insulating member is used to insulate the electrode lead-out piece from the first casing wall.

In some embodiments, the first casing wall is provided with a pressure relief mechanism; in the first direction, the pressure relief mechanism does not overlap with the body part. The embodiments of the present application can reduce the risk of the body part blocking the pressure relief mechanism when thermal runaway occurs in the battery cell, thereby enabling timely pressure release and improving the reliability of the battery cell.

In some embodiments, a minimum distance H₁ between the pressure relief mechanism and an edge of the first casing wall is from 2 mm to 5 mm.

The embodiments of the present application set H₁ to be greater than or equal to 2 mm, so as to reduce the force applied to the pressure relief mechanism when the edge of the first casing wall is impacted, thereby lowering the risk of rupture or failure of the pressure relief mechanism and improving reliability. H₁ is set to be smaller than or equal to 5 mm to reduce the risk of the pressure relief mechanism being blocked by the body part.

In some embodiments, the first casing wall is provided with a liquid injection hole, and a minimum distance H₂ between the pressure relief mechanism and the liquid injection hole is greater than or equal to 1 mm. The embodiments of the present application can reduce the stress transmitted to the pressure relief mechanism during liquid injection, thereby lowering the risk of rupture or failure of the pressure relief mechanism and improving reliability.

In some embodiments, the AC internal resistance of the battery cell is smaller than or equal to 1 milliohm. A smaller AC internal resistance of the battery cell reduces heat generation of the battery cell, thereby improving the cycle performance of the battery cell.

In some embodiments, the second casing wall is made of aluminum or steel, and the first casing wall is made of aluminum or steel. Aluminum and steel have high strength and good thermal conductivity; using aluminum or steel for the casing walls can improve the cycle performance of the battery cell and enhance its reliability.

In some embodiments, the electrode assembly includes a plurality of first pole pieces and a plurality of second pole pieces, polarity of the first pole piece being opposite to the polarity of the second pole piece, the plurality of first pole pieces and the plurality of second pole pieces being alternately stacked in the first direction. The first pole piece includes a first current collector and a first active substance layer coated on a surface of the first current collector, the second pole piece includes a second current collector and a second active substance layer coated on a surface of the second current collector. The body part includes a portion of the first current collector coated with the first active substance layer, a portion of the second current collector coated with the second active substance layer, the first active substance layer, and the second active substance layer, and the first tab includes a portion of the first current collector not coated with the first active substance layer.

In some embodiments, the casing includes a housing and a cover plate provided in the first direction, the housing having an opening, the cover plate covering the opening. The housing includes the second casing wall, and the cover plate includes the first casing wall. The housing and the cover plate can be joined together to form an accommodation space for accommodating the electrode assembly. The housing and the cover plate are easy to form and assemble.

In some embodiments, the surface of the cover plate facing the housing is provided with a positioning groove, and a portion of the body part is accommodated in the positioning groove. During assembly, the positioning groove can position the body part, improving assembly efficiency.

In a second aspect, an embodiment of the present application provides a battery including the battery cell provided by any one of the plurality of embodiments according to the first aspect.

In a third aspect, an embodiment of the present application provides an electrical device including the battery provided by any one of the embodiments according to the first aspect, and the battery is used to provide electric energy.

### BRIEF DESCRIPTION OF THE DRAWINGS

The feature, advantage, and technical effect of the exemplary embodiment of the present application is described below with reference to the figures.
FIG. 1 is a schematic structural diagram of a vehicle provided in some embodiments of the present application;
FIG. 2 is an exploded schematic view of a battery according to some embodiments of the present application;
FIG. 3 is a schematic structural diagram of a battery according to some other embodiments of the present application;
FIG. 4 is a schematic diagram of a battery cell according to some embodiments of the present application;
FIG. 5 is a cross-sectional schematic diagram taken along line A-A in FIG. 4;
FIG. 6 is an enlarged schematic view at a block in FIG. 5;
FIG. 7 is a cross-sectional schematic diagram taken along line B-B in FIG. 4;
FIG. 8 is a schematic diagram of an electrode assembly of a battery cell according to some embodiments of the present application;
FIG. 9 is a cross-sectional schematic diagram taken along line C-C in FIG. 8;
FIG. 10 is a schematic diagram of a battery cell according to some embodiments of the present application;
FIG. 11 is a local cross-sectional schematic diagram of a battery cell according to some embodiments of the present application at a liquid injection hole;
FIG. 12 is a structural schematic diagram of an insulating bracket according to some embodiments of the present application;
FIG. 13 is a structural schematic diagram of an insulating bracket in FIG. 12 viewed from another perspective;
FIG. 14 is a cross-sectional schematic diagram taken along line E-E in FIG. 13; and
FIG. 15 is a cross-sectional schematic diagram of a cover plate of a battery cell according to some embodiments of the present application.

The figures are not necessarily drawn to the actual scale.

Description of reference numerals:
1. vehicle; 2. battery; 3. controller; 4. motor; 5. casing; 5a. first box portion; 5b. second box portion; 5c. accommodating space; 6. battery cell; 7. busbar component;
10. electrode assembly; 11. body part; 12. first tab; 121. first portion; 122. bent portion; 123. second portion; 124. converging portion; 13. second tab; 14. first pole piece; 141. first current collector; 142. first active substance layer; 15. second pole piece; 151. second current collector; 152. second active substance layer; 16. separator;
20. casing; 21. first casing wall; 211. pressure relief mechanism; 212. liquid injection hole; 213. first outer surface; 22. second casing wall; 221. second outer surface; 23. first recess; 231. bottom wall; 232. side wall; 24. second recess; 25. third casing wall; 251. first sub-wall; 252. second sub-wall; 20a. housing; 20b. cover plate; 20c. positioning groove;
30. first electrode lead-out piece; 31. first connecting plate; 32. second connecting plate; 33. third connecting plate; 34. first electrode terminal; 35. first terminal plate; 351. first terminal portion; 352. second terminal portion;
40. insulating bracket; 40a. first accommodating recess; 40b. second accommodating recess; 40c. flow guiding wall; 40d. liquid injection channel; 40e. liquid injection opening; 41. insulating substrate; 42. first limiting plate; 43. second limiting plate; 44. third limiting plate; 45. support block;
50. insulating member;
60. first seal;
70. second seal;
80. second electrode lead-out piece; 81. fourth connecting plate;
Z. first direction; X. second direction; Y. third direction.

### DETAILED DESCRIPTION OF PREFERRED EMBODIMENTS

Hereinafter, specific embodiments of the sodium-ion battery cell, battery, and electrical device disclosed in the present application will be described in detail with appropriate reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. The accompanying drawings and the following descriptions are provided for those skilled in the art to fully understand this application, and are not intended to limit the subject matter described in the claims.

The "range" disclosed in this application is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In this application, unless otherwise stated, a numerical range "a-b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of the present application may be combined with each other to form new technical solutions, and it is conceivable that such technical solutions should be included in the disclosure of the present application.

Unless otherwise defined, all technical and scientific terms used in the present application have the same meaning as commonly understood by a person skilled in the art of the present application. In the present application, the terms used in the description of the present application are only used for describing specific embodiments and are not intended to limit the present application, and the terms "comprise", "have", and any variations thereof in the description and claims of the present application and the above description of the drawings are intended to cover a non-exclusive inclusion. The terms "first", "second", and the like in the description and claims of the present application or in the drawings are used to distinguish between different objects, and are not used to describe a specific sequence or a primary-secondary relationship.

In the description of the present application, it should be noted that, unless explicitly specified and defined otherwise, the terms "mount", "couple", "connect", and "attach" are to be understood in a broad sense. For example, the terms may indicate a fixed connection, a detachable connection, or an integral connection, and may indicate a direct connection or an indirect connection implemented via an intermediate medium, or internal communication between two elements. A person skilled in the art can understand specific meanings of these terms in the present application according to specific situations.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

In this application, the term "or" is inclusive, unless specifically stated otherwise. For example, the phrase "A or B" means "A, B, or both A and B". More specifically, the condition "A or B" is satisfied by either A being true (or present) and B being false (or absent), A being false (or absent) and B being true (or present), or both A and B being true (or present).

In the present application, the terms "a plurality of" and "various" mean two or more.

Unless otherwise specified, the numerical values of each parameter mentioned in the present application can be measured by various test methods commonly used in the art, for example, they can be measured according to the test methods provided in the embodiments of the present application. A test temperature for each parameter is 25°C, unless otherwise specified.

In embodiments of the present application, the battery cell may be a secondary battery, where the secondary battery refers to a battery cell that can be recharged after discharge to reactivate the active materials for continued use.

A battery cell generally includes an electrode assembly, and the electrode assembly includes a positive electrode and a negative electrode. During charging and discharging of the battery cell, intercalation/de-intercalation of active ions (e.g., lithium ions) are enabled at the positive electrode and negative electrode by moving the active ions between the positive electrode and negative electrode. Exemplarily, the electrode assembly further includes a separator provided between the positive electrode and the negative electrode, which can prevent short circuiting between the positive and negative electrodes while allowing active ions to pass through.

The battery cell may be, but is not limited to, a lithium-ion battery, a sodium-ion battery, a sodium-lithium ion battery, a lithium metal battery, a sodium metal battery, a lithium-sulfur battery, a magnesium-ion battery, a nickel-hydrogen battery, a nickel-cadmium battery, a leadacid battery, or the like.

The battery cell may be a prismatic battery cell or a battery cell of other shapes; the prismatic battery cell includes square-casing battery cells, blade-shaped battery cells, or polygonal prismatic battery cells, where the polygonal prismatic battery cell may for example be a hexagonal prismatic battery cell, and other shaped battery cells may be cylindrical battery cells.

The battery cell may be a hard-casing battery cell, a pouch battery cell, or another type of battery cell.

A battery mentioned in the embodiments of the present application refers to a single physical module including one or a plurality of battery cells to provide a higher voltage and capacity.

In some embodiments, the battery may be a battery module, and when there are a plurality of battery cells, the plurality of battery cells are arranged and fixed to form a battery module.

In some embodiments, the battery may be a battery pack including a box and a battery cell, and the battery cell or the battery module is accommodated in the box.

In some embodiments, the box may be a part of a chassis structure of a vehicle. For example, a part of the box body may be at least part of a chassis of a vehicle, or a part of the box body may be at least part of a transverse beam and a longitudinal beam of a vehicle.

In some embodiments, the battery may be an energy storage device. The energy storage device includes an energy storage container, an energy storage cabinet, and the like.

Heat is generated when the battery cell is being charged, and accumulation of heat inside the battery cell causes the temperature of the battery cell to rise, thereby affecting the cycle performance and cycle life of the battery cell. In some embodiments, by increasing the area of the large surface of the battery cell, the heat dissipation efficiency of the battery cell can be enhanced, the temperature rise during charging and discharging can be reduced, and thus the cycle performance and cycle life of the battery cell can be improved. Under the premise of consistent capacity of the battery cell, the area of the large surface of the battery cell is negatively correlated with the thickness of the battery cell; as the large surface area increases, the structural strength of the battery cell may decrease, leading to a risk of deformation during transportation or use, which affects the reliability of the battery cell.

In view of this, the embodiments of the present disclosure provide a technical solution that designs the dimensional dimensions of the battery cell to increase the heat dissipation area, reduce temperature rise during charging and discharging, improve cycle performance and cycle life, and reduce the risk of deformation caused by decreased structural strength, thereby enhancing the reliability of the battery cell.

The technical solutions described in the embodiments of the present application are applicable to batteries and electrical devices using batteries.

The electrical device may be a vehicle, a mobile phone, a portable device, a notebook computer, a ship, a spacecraft, an electric toy, an electric tool, and the like. The vehicle may be a fuel vehicle, a gas vehicle, or a new energy vehicle which may be a pure electric vehicle, a hybrid vehicle, a range-extended electric vehicle, or the like; the spacecraft includes an airplane, a rocket, a space plane, a spaceship, or the like; the electric toy includes a stationary or mobile electric toy, such as a game machine, an electric car toy, an electric ship toy, an electric airplane toy, or the like; and the electric tool includes a metal cutting electric tool, a grinding electric tool, an assembly electric tool, and an electric tool for railways, such as, an electric drill, an electric sander, an electric wrench, an electric screwdriver, an electric hammer, an impact drill, a concrete vibrator, an electric planer, or the like. In the embodiments of the present application, the above described electrical device is not particularly limited.

To facilitate description, in the following embodiments, as an example for description, an electrical device is a vehicle.

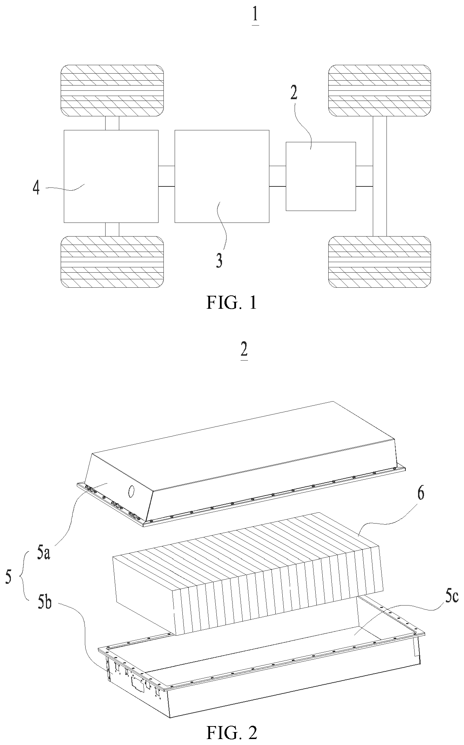

FIG. 1 is a schematic structural diagram of a vehicle according to some embodiments of the present application.

As shown in FIG. 1, inside the vehicle 1, a battery 2 is provided, which may be provided at the bottom, head, or tail of the vehicle 1. The battery 2 may be used to power the vehicle 1, for example, the battery 2 may be used as an operating power source of the vehicle 1.

The vehicle 1 may further include a controller 3 and a motor 4, where the controller 3 is used to control the battery 2 to power the motor 4, for example, for a working power requirement of the vehicle 1 during starting, navigating, and driving.

In some embodiments of the present application, the battery 2 may be used not only as an operating power source for the vehicle 1, but also as a driving power source for the vehicle 1, instead of or partially instead of fuel or natural gas to provide driving power for the vehicle 1.

FIG. 2 is an exploded schematic view of a battery according to some embodiments of the present application.

As shown in FIG. 2, the battery 2 includes a box 5 and a battery cell 6 (not shown). The battery cell 6 is accommodated in the box 5.

The box 5 is used to accommodate the battery cell 6, and the box 5 may have various structures. In some embodiments, the box 5 may include a first box portion 5a and a second box portion 5b, the first box portion 5a and the second box portion 5b cover each other, and the first box portion 5a and the second box portion 5b jointly define the accommodation space 5c for accommodating the battery cell 6. The second box portion 5b may be a hollow structure with an opening at one end, the first box portion 5a is a plate-shaped structure, and the first box portion 5a covers an opening side of the second box portion 5b to form the box 5 having the accommodation space 5c; and the first box portion 5a and second box portion 5b may also both be a hollow structure with an opening at one end, and an opening side of the first box portion 5a covers an opening side of the second box portion 5b to form the box 5 having the accommodation space 5c. The first box portion 5a and second box portion 5b may be in various shapes such as cylinder, rectangular cuboid, or the like.

To increase sealing performance after the first box portion 5a and the second box portion 5b are connected, a sealing member, for example, a sealant or a sealing ring or the like may be provided between the first box portion 5a and the second box portion 5b.

Assuming that the first box portion 5a covers the top of the second box portion 5b, the first box portion 5a may also be referred to as an upper box cover, and the second box portion 5b may also be referred to as a lower box.

In the battery 2, one or more battery cells 6 may be provided. If a plurality of battery cells 6 are provided, the plurality of battery cells 6 may be subjected to series connection, parallel connection, or series-parallel connection, and the series-parallel connection means that the plurality of battery cells 6 are subjected to both series connection, and parallel connection. The plurality of battery cells 6 may be subjected to series connection, parallel connection, or series-parallel connection directly, and then an integration formed by the plurality of battery cells 6 is accommodated in the box 5. Certainly, alternatively, a battery module may be formed by integrating the plurality of battery cells 6 by series connection, parallel connection, or series-parallel connection, and then a plurality of battery modules are integrated by series connection, parallel connection, or series-parallel connection, and accommodated in the box 5.

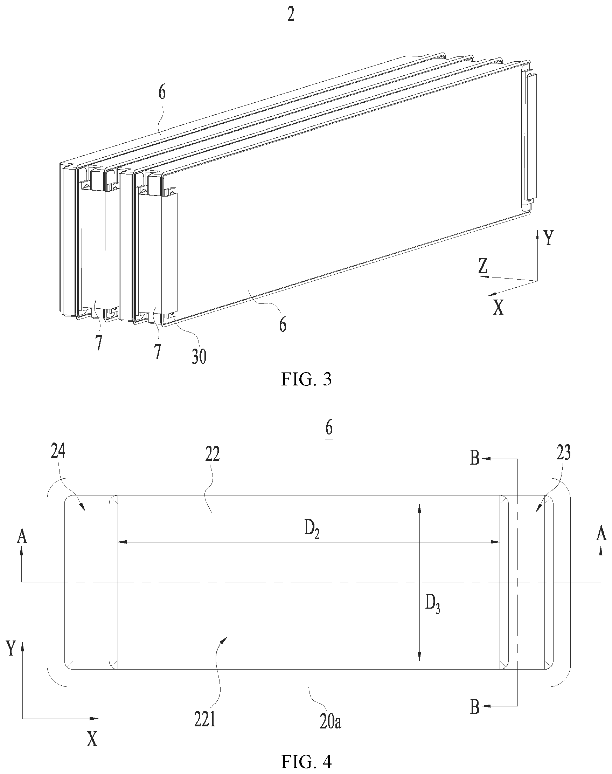

FIG. 3 is a schematic structural diagram of a battery cell according to some other embodiments of the present application.

As shown in FIG. 3, in some embodiments, the battery 2 includes a plurality of battery cells 6 and a plurality of busbar components 7, where the plurality of busbar components 7 can connect the plurality of battery cells 6 in series, in parallel, or in a combination thereof.

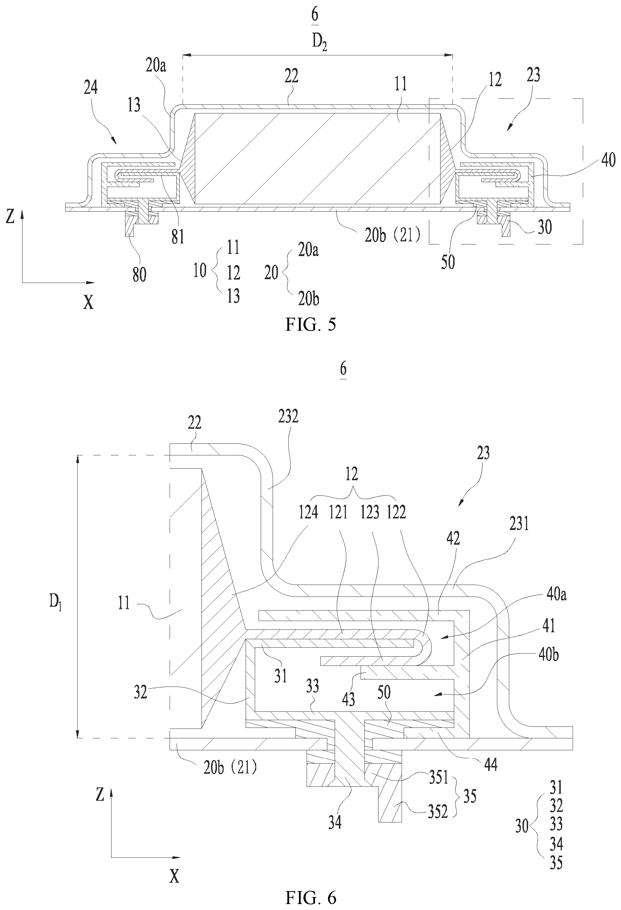

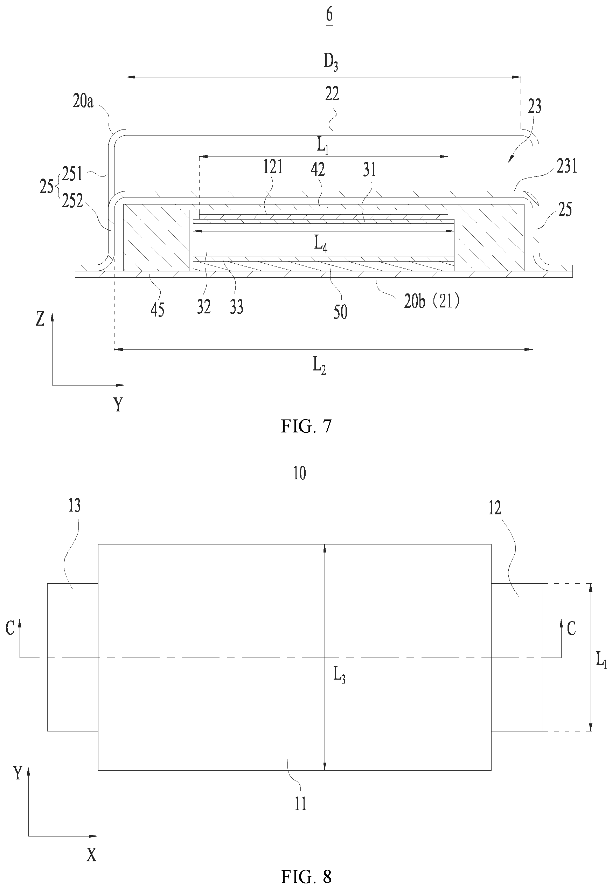

FIG. 4 is a schematic diagram of a battery cell according to some embodiments of the present application; FIG. 5 is a cross-sectional schematic diagram taken along line A-A in FIG. 4; FIG. 6 is an enlarged view of a boxed region in FIG. 5; and FIG. 7 is a cross-sectional view taken along line B-B in FIG. 4.

With reference to FIGS. 4 to 6, the embodiments of the present application provide a battery cell 6 including a casing 20 and an electrode assembly 10, where the electrode assembly 10 is accommodated in the casing 20.

The electrode assembly 10 includes a positive electrode and a negative electrode. During charge and discharge of the battery cell 6, intercalation/de-intercalation of active ions (e.g., lithium ions) are enabled at the positive pole and negative pole by moving the active ions between the positive pole and negative pole. Alternatively, the electrode assembly 10 further includes a separator provided between the positive electrode and the negative electrode, where the separator can reduce the risk of short circuiting between the positive and negative electrodes while allowing the active ions to pass through.

In some embodiments, the positive electrode may be a positive electrode sheet, which may include a positive current collector and a positive active substance layer provided on at least one surface of the positive current collector.

As an example, the positive current collector has two surfaces opposite in the thickness direction thereof, and the positive active substance layer is provided on either one or both of the two opposite surfaces of the positive current collector.

As an example, a metal foil or a composite current collector may be used for the positive current collector. For example, as the metal foil, stainless steel, copper, aluminum, nickel, carbon electrode, carbon, titanium, aluminum or stainless steel subjected to surface treatment by silver, or the like may be used. The composite current collector may include a macromolecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a macromolecular material (a substrate of polypropylene, polyethylene terephthalate, polybutylene terephthalate, polystyrene, polyethylene, or the like).

As an example, the positive active substance layer includes a positive active material, and the positive active material may include at least one of a lithium-containing phosphate, a lithium-transition metal oxide, and respective modified compounds thereof. However, the present application is not limited to these materials, and another conventional material that can be used as a positive active substance layer of a battery may also be used. These positive active substance layers may be used alone or in combination of two or more thereof. Here, examples of the lithium-containing phosphate may include, but are not limited to, at least one of lithium iron phosphate (e.g., LiFePO₄, also referred to as LFP), a composite material of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Examples of the lithium-transition metal oxide may include, but are not limited to, at least one of lithium cobalt oxide (e.g., LiCoO₂), lithium nickel oxide (e.g., LiNiO₂), lithium manganese oxide (e.g., LiMnO₂, and LiMn2O₄), lithium nickel cobalt oxide, lithium manganese cobalt oxide, lithium nickel manganese oxide, lithium nickel cobalt manganese oxide (e.g., LiNi_{1/3}, Co_{1/3}Mn_{1/3}O₂(also referred to as NCM₃₃₃), LiNi_{0.5}Co_{0.2}Mn_{0.3}O₂(also referred to as NCM₅₂₃), LiNi_{0.5}Co_{0.25}Mn_{0.25}O₂(also referred to as NCM₂₁₁), LiNi_{0.6}Co_{0.2}Mn_{0.2}O₂(also referred to as NCM₆₂₂), LiNi_{0.8}Co_{0.1}Mn_{0.1}O₂(also referred to as NCM₈₁₁)), lithium nickel cobalt aluminum oxide (e.g., LiNi_{0.80}Co_{0.15}Al_{0.05}O₂), a modified compound thereof and the like.

In some embodiments, a foamed metal may be used for the positive electrode. The foamed metal may be foamed nickel, foamed copper, foamed aluminum, foamed alloy, foamed carbon, or the like. When the foamed metal is used as the positive electrode, its surface the foamed metal may not be provided with the positive active substance layer, and of course, the positive active substance layer may be provided. As an example, within the foamed metal, a lithium source material, which is a lithium metal and/or a lithium-rich material, a potassium metal or a sodium metal may also be filled or/and deposited.

In some embodiments, the negative electrode may be a negative electrode sheet that may include a negative current collector.

As an example, for the negative current collector, a metal foil, a foamed metal, or a composite current collector may be employed. For example, as the metal foil, aluminum or stainless steel which is subjected to surface treatment by silver, stainless steel, copper, aluminum, nickel, carbon electrode, carbon, nickel, titanium, or the like can be employed. The foamed metal may be foamed nickel, foamed copper, foamed aluminum, foamed alloy, foamed carbon, or the like. The composite current collector may include a macromolecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the negative plate may include a negative current collector and a negative active material provided on at least one surface of the negative current collector.

As an example, the negative current collector has two surfaces opposite in its own thickness direction, and the negative active material is provided on either one or both of the two opposite surfaces of the negative current collector.

As an example, for the negative active material, a negative active material which is known in the art for a battery cell may be used. As an example, the negative active material may include at least one of the following materials: synthetic graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and another conventional material that can be used as a negative active material of a battery may also be used. These negative active materials may be used alone or in combination of two or more thereof.

In some embodiments, the material of the positive current collector may be aluminum and the material of the negative current collector may be copper.

In some embodiments, the separator includes a separator. The type of the separator is not particularly limited in the present application, and any well-known porous separator with good chemical stability and mechanical stability may be used.

As an example, the main material of the separator may be selected from at least one of glass fiber, non-woven fabric, polyethylene, polypropylene, polyvinylidene fluoride, and ceramics. The separator may be a single-layer thin film or may be a multi-layer composite thin film, which is not particularly limited. When the separator is a multi-layer composite thin film, materials of each layer may be the same or different, which is not particularly limited. The spacer may be a single component located between the positive electrode and negative electrode, or may be attached to the surfaces of the positive electrode and negative electrode.

In some implementations, the spacer is a solid electrolyte. The solid electrolyte is disposed between the positive electrode and the negative electrode, and serves to transfer ions and separate the positive electrode and negative electrode.

The casing 20 has a hollow structure with an accommodation space formed therein for accommodating the electrode assembly 10 and an electrolyte. Specifically, the shape of the casing 20 may be determined based on a specific shape of the electrode assembly 10. For example, if the electrode assembly 10 has a rectangular parallelepiped structure, a rectangular parallelepiped casing may be used.

The casing 20 may be made of various materials, for example, metal or plastic. Alternatively, the casing 20 may be made of copper, iron, aluminum, steel, aluminum alloy, or the like. Exemplarily, the casing 20 may be a steel casing, an aluminum casing, a plastic casing (e.g., polypropylene), a composite metal casing (e.g., copper-aluminum composite casing), an aluminum-plastic film, or the like.

As an example, the casing 20 includes a housing 20a and a cover plate 20b, where the housing 20a has an opening, and the cover plate 20b is used to seal the opening.

The housing 20a is a component to cooperate with the cover plate 20b to form an internal cavity of the battery cell 6, where the formed internal cavity may be used to accommodate the electrode assembly 10, electrolyte, and other components.

The housing 20a and the cover plate 20b may be separate components. Exemplarily, an opening may be provided on the housing 20a, and the inner cavity of the battery cell 6 may be formed by closing the cover plate 20b at the opening.

The housing 20a may have various shapes and dimensions, such as a cuboid, a hexagonal prism, or the like. Specifically, the shape of the housing 20a may be determined based on a specific shape and dimension of the electrode assembly 10. The material of the housing 20a may be various, for example, copper, iron, aluminum, stainless steel, aluminum alloy, or the like.

The shape of the cover plate 20b may be adapted to match the shape of the housing 20a so as to fit the housing 20a. The cover plate 20b may be made of a material that is the same as or different from that the housing 20a is made of. Alternatively, the cover plate 20b may be made of a material with certain hardness and strength (e.g., copper, iron, aluminum, stainless steel, aluminum alloy, plastic, or the like). As such, the cover plate 20b is less prone to deformation under compressive impact, thereby enabling the battery cell 6 to have higher structural strength and improved reliability.

The cover plate 20b may be connected to the housing 20a by welding, bonding, clipping, or other means.

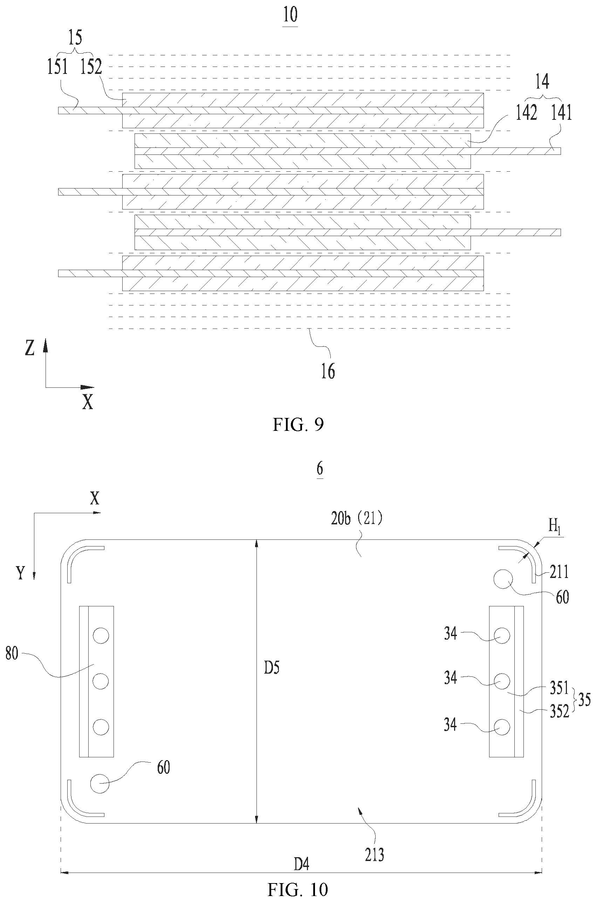

FIG. 8 is a schematic diagram of an electrode assembly of a battery cell according to some embodiments of the present application; and FIG. 9 is a cross-sectional schematic diagram taken along line C-C in FIG. 8.

Please refer to FIGS. 4 to 9 together; in some embodiments, the battery cell 6 includes an electrode assembly 10 and a casing 20, where the electrode assembly 10 is accommodated in the casing 20. The casing 20 includes a first casing wall 21 and a second casing wall 22 which are oppositely arranged in a first direction Z, and the area of a second outer surface 221 of the second casing wall 22 is smaller than or equal to the area of a first outer surface 213 of the first casing wall 21. The electrode assembly 10 is accommodated in the casing 20 and includes a body part 11 and a first tab 12, the body part 11 is located between the first casing wall 21 and the second casing wall 22 in the first direction Z, the first tab 12 extends out from at least one end of the body part 11 in a second direction X, and the second direction X intersects with the first direction Z.

The electrode assembly 10 is a component in the battery cell 6 in which an electrochemical reaction occurs. One or more electrode assemblies 10 can be contained within the casing 20. The electrode assembly 10 may be of a wound structure, a stacked structure, a woundstacked composite structure, or other structures.

The electrode assembly 10 may have a cylindrical shape, a flat shape, a polygonal column shape, or the like.

As an example, the electrode assembly 10 includes a first pole piece 14, a second pole piece 15, and a separator 16, where the polarity of the first pole piece 14 is opposite to that of the second pole piece 15, and the separator 16 is used to electrically insulate and isolate the first pole piece 14 and the second pole piece 15.

The first pole piece 14 includes a first current collector 141 and a first active substance layer 142 coated on the surface of the first current collector 141, and the second pole piece 15 includes a second current collector 151 and a second active substance layer 152 coated on the surface of the second current collector 151. The body part 11 includes a portion of the first current collector 141 coated with the first active substance layer 142, a portion of the second current collector 151 coated with the second active substance layer 152, the first active substance layer 142, and the second active substance layer 152, and the first tab 12 includes a portion of the first current collector 141 not coated with the first active substance layer 142.

One of the first pole piece 14 and the second pole piece 15 is a positive electrode, and the other is a negative electrode.

The first tab 12 extends out from one end of the body part 11 in the second direction X; alternatively, the first tab 12 may be two, with the two first tabs 12 extending out from both ends of the body part 11 in the second direction X, respectively.

The first casing wall 21 is a wall of the casing 20 having a certain thickness, and the second casing wall 22 is a wall of the casing 20 having a certain thickness. The first casing wall 21 and the second casing wall 22 are spaced apart in the first direction Z.

The first casing wall 21 may have various shapes, such as circular, rectangular, square, or other shapes. The second casing wall 22 may have various shapes, such as circular, rectangular, square, or other shapes.

The first casing wall 21 may be a flat wall or a curved wall. The second casing wall 22 may be a flat wall or a curved wall.

The area of the second outer surface 221 of the second casing wall 22 may be equal to the area of the first outer surface 213 of the first casing wall 21. For example, the second casing wall 22 and the first casing wall 21 have the same shape and dimension. Alternatively, the area of the second outer surface 221 of the second casing wall 22 may be smaller than the area of the first outer surface 213 of the first casing wall 21.

In the first direction Z, the body part 11 and the second casing wall 22 overlap. In the first direction Z, the first tab 12 and the second casing wall 22 may overlap or may not overlap.

In some embodiments, a distance between the first casing wall 21 and the second casing wall 22 in the first direction Z is D₁ mm, and the area of the second outer surface 221 of the second casing wall 22 is S mm², where S is 36 to 500 times the square of D₁.

Exemplarily, D₁ may be the minimum distance between the first casing wall 21 and the second casing wall 22 in the first direction Z.

The second outer surface 221 of the second casing wall 22 is located on one side of the body part 11 in the first direction Z. In any direction perpendicular to the first direction Z, the projection of the second outer surface 221 of the second casing wall 22 does not overlap with the projection of the body part 11. Exemplarily, the second outer surface 221 of the second casing wall 22 is perpendicular to the first direction Z.

The battery cell 6 can dissipate heat outward through the first casing wall 21 and the second casing wall 22. The area S of the second outer surface 221 of the second casing wall 22 is smaller than or equal to the area of the first outer surface 213 of the first casing wall 21. The larger S is, the greater the heat exchange area between the second casing wall 22 and the external environment and between the first casing wall 21 and the external environment, resulting in higher heat dissipation efficiency of the battery cell 6.

The body part 11 is a primary heat source inside the battery cell 6, and the heat generated by the body part 11 needs to be dissipated outward through the first casing wall 21 and the second casing wall 22; the smaller D₁ is, the shorter the heat transfer path in the first direction Z between the body part 11 and the first casing wall 21 and between the body part 11 and the second casing wall 22, leading to higher heat dissipation efficiency of the battery cell 6.

S and D₁ also affect the rigidity and structural strength of the battery cell 6. For example, the larger S is and the smaller D₁ is, the more the battery cell 6 tends toward a sheet-like structure, making the battery cell 6 prone to deformation under external impact during manufacturing, transportation, or use, increasing the risk of electrode assembly 10 electrode cracking, thereby affecting the reliability of the battery cell 6.

In embodiments of the present application, setting S to be 36 to 500 times the square of D₁ enables the battery cell to have both good heat dissipation efficiency and good rigidity and structural strength. Specifically, S is set to be greater than or equal to 36 times the square of D₁ to improve the heat dissipation efficiency of the battery cell 6, reduces heat accumulation within the battery cell, lowers temperature rise during charge and discharge processes, and thereby improves cycle performance and cycle life of the battery cell. In the embodiments of the present application, S is set to be smaller than or equal to 500 times the square of D₁ to improve the rigidity and structural strength of the battery cell 6, reduce deformation of the battery cell 6 under external impact, and enhance the reliability of the battery cell 6.

In some embodiments, S may be 36, 40, 45, 50, 60, 70, 80, 100, 125, 150, 175, 200, 250, 300, 350, 400, 450 or 500 times of D₁², or a ratio of S to D₁² may fall within a range defined by any two of the aforementioned values.

In some embodiments, S/D₁² is from 45 to 175, which can further balance the cycle performance and reliability of the battery cell 6, reduce temperature rise of the battery cell 6, and reduce the risk of deformation of the battery cell 6.

In some embodiments, the second outer surface 221 of the second casing wall 22 is a planar surface.

In some embodiments, the first outer surface 213 of the first casing wall 21 is a planar surface.

In some embodiments, the first casing wall 21 and the second casing wall 22 are configured to exchange heat with a heat exchange plate of the battery.

In some embodiments, a dimension of the second casing wall 22 in the second direction X is D₂ mm, a dimension of the second casing wall 22 in a third direction Y is D₃ mm, and the first direction Z, the second direction X, and the third direction Y are mutually perpendicular. D₁, D₂ and D₃ satisfy: D₂>D₃>D₁.

Exemplarily, D₂ is the minimum dimension of the second casing wall 22 in the second direction X, and D₃ is the minimum dimension of the second casing wall 22 in the third direction Y.

It should be understood that "perpendicular" includes not only absolute perpendicularity but also substantial perpendicularity as conventionally recognized in engineering.

The body part 11 may be a primary factor determining a capacity of the battery cell 6. D₂ is related to the dimension of the body part 11 in the second direction X, and D₃ is related to the dimension of the body part 11 in the third direction Y. The first tab 12 extends from the end of the body part 11 in the second direction X, occupying additional space in the second direction X but not in the third direction Y; the embodiments of the present application allow the body part 11 to have a relatively large dimension in the second direction X, thereby reducing a ratio of the dimension of the first tab 12 in the second direction X to the dimension of the body part 11 in the second direction X, improving space utilization, and enhancing energy density of the battery cell 6. D₁ being smaller than D₂ and D₃ shortens the heat transfer path, improves heat dissipation efficiency, and thereby improves the cycle performance and cycle life of the battery cell.

In some embodiments, the second casing wall 22 is rectangular, and S=D₂×D₃. It should be understood that "rectangular" includes not only standard rectangles but also shapes substantially rectangular as conventionally recognized; for example, the second casing wall 22 may still be considered rectangular even if rounded corners are provided at its four corners.

In some embodiments, D₂/D₃ is from 4 to 10.2.

Under the condition that D₂×D₃ is constant, the larger D₂ is, the higher the utilization rate of the body part 11 in the second direction X is; the larger D₃ is, the larger the size of the first tab 12 in the third direction Y is, and the stronger the current-carrying capacity of the first tab 12 is.

The embodiments of the present application define D₂/D₃ to be from 4 to 10.2, space utilization of the battery cell 6 and the current-carrying capacity of the first tab 12 may be balanced, thereby improving space utilization and enhancing the energy density of the battery cell 6 while ensuring that the current-carrying capacity of the first tab 12 meets requirements.

Alternatively, D₂/D₃ is 4, 5, 6, 7, 8, 9, 9.5, 10 or 10.2.

In some embodiments, D₂/D₃ is from 5 to 7, so as to further balance the space utilization of the battery cell 6 and the current-carrying capacity of the first tab 12.

In some embodiments, D₃/D₁ is from 3 to 7, the heat dissipation efficiency of the battery cell 6 is improved, the temperature rise of the battery cell 6 is reduced during charging and discharging, and the rigidity and structural strength of the battery cell 6 is improved, thereby reducing deformation of the battery cell 6 when subjected to external impact and enhancing the reliability of the battery cell 6.

Alternatively, D₃/D₁ is 3, 3.5, 4, 4.5, 5, 5.5, 6, 6.5 or 7.

In some embodiments, D₃/D₁ is from 3 to 5, the heat dissipation efficiency of the battery cell 6 is improved, the temperature rise of the battery cell 6 is reduced during charging and discharging, and the rigidity and structural strength of the battery cell 6 is improved, thereby reducing deformation of the battery cell 6 when subjected to external impact and enhancing the reliability of the battery cell 6.

In some embodiments, D₂ is from 300 to 3000. Alternatively, D₂ is 300, 400, 500, 600, 1000, 1200, 1500, 2000, 2500 or 3000.

In the embodiments of the present application, D₂ being greater than or equal to 300 enables the battery cell 6 to have a larger dimension in the second direction X, thereby reducing the number of battery cells 6 in the battery, simplifying the battery manufacturing process, and improving the energy density of the battery. D₂ being smaller than or equal to 3000 can reduce the difference in a conductive path between the two ends of the body part 11 and the first tab 12, thereby reducing heat generation.

In some embodiments, D₂ is from 500 to 1000.

In some embodiments, the energy of the battery cell 6 is 150×D₁×S×10⁻⁶ - 600×D₁×S×10⁻⁶, with a unit of energy being Wh.

The energy of the battery cell 6 is related to the heat generated by the battery cell 6. The embodiments of the present application define the energy of the battery cell 6 based on D₁×S, which can balance the heat dissipation efficiency and heat generation of the battery cell 6 to some extent, reduce the temperature rise of the battery cell 6 during charging and discharging, and improve the cycle performance of the battery cell 6.

Alternatively, the energy of the battery cell is 150×Di×S×10⁻⁶Wh, 150×D₁×S×10⁻⁶Wh, 200×D₁×S×10⁻⁶Wh, 300×D₁×S×10⁻⁶Wh, 400×D₁×S×10⁻⁶Wh, 500×D₁×S×10⁻⁶Wh or 600×D₁×S×10⁻⁶Wh.

Exemplarily, taking a lithium iron phosphate battery cell as an example, the energy of the battery cell may be measured as follows:
the battery cell is fully charged at a rate of 1/3 C; the voltage of the battery cell in the fully charged state is 3.7 V; then the battery cell is discharged at a rate of 1/3 C until the voltage reaches 2.5 V, and the discharge capacity of the battery cell is measured. Energy = Discharge capacity × Voltage platform (3.2 V).

In some embodiments, the thickness of the second casing wall 22 is from 0.1 mm to 0.8 mm, so as to balance the strength and weight of the second casing wall 22, improve the reliability of the battery cell 6, and enhance the energy density of the battery cell 6.

Alternatively, the thickness of the second casing wall 22 is 0.1 mm, 0.2 mm, 0.3 mm, 0.4 mm, 0.5 mm, 0.6 mm, 0.7 mm, or 0.8 mm.

In some embodiments, the thickness of the second casing wall 22 is from 0.2 mm to 0.5 mm, so as to balance the strength and weight of the second casing wall 22, improve the reliability of the battery cell 6, and enhance the energy density of the battery cell 6.

In some embodiments, the thickness of the second casing wall 22 is 0.3 mm.

In some embodiments, the area of the second outer surface 221 of the second casing wall 22 is smaller than the area of the first outer surface 213 of the first casing wall 21. The casing 20 is provided at an end in the second direction X with a first recess 23, the first recess 23 being formed by the second casing wall 22 recessing toward the first casing wall 21. In the first direction, at least a portion of the first tab 12 is located between a bottom wall 231 of the first recess 23 and the first casing wall 21.

The first recess 23 is recessed relative to the second outer surface 221 of the second casing wall 22.

In the embodiments of the present application, since the first tab 12 requires less space in the first direction Z, the first recess 23 can be provided on the outer side of the casing 20, thereby reducing the volume of the battery cell 6 and improving the volumetric energy density of the battery cell 6.

Exemplarily, the first outer surface 213 is parallel to the second outer surface 221.

In some embodiments, the casing 20 includes two third casing walls 25 oppositely arranged in the third direction Y, each of the third casing walls 25 being connected to the first casing wall 21 and the second casing wall 22, the first direction Z, the second direction X, and the third direction Y being mutually perpendicular. In the third direction Y, at least a portion of the first tab 12 is located between the two third casing walls 25. In the third direction Y, a dimension of the first tab 12 is L₁ mm, a distance between the two third casing walls 25 is L₂ mm, and L₁/L₂ is from 0.2 to 0.9.

The embodiments of the present application define L₁/L₂ to be greater than or equal to 0.2 to increase current-carrying capacity of the first tab 12 and reduce heat generation of the first tab 12. The embodiments of the present application define L₁/L₂ to be smaller than or equal to 0.9 to reduce the risk of short circuiting between the first tab 12 and the third casing wall 25.

Alternatively, L₁/L₂ is 0.2, 0.3, 0.4, 0.5, 0.6, 0.7, 0.8 or 0.9.

In some embodiments, L₁/L₂ is from 0.5 to 0.8, so as to further increase the current-carrying capacity of the first tab 12 and reduce the risk of short circuiting between the first tab 12 and the third casing wall 25.

In some embodiments, the side wall 232 of the first recess 23 is connected to the second casing wall 22.

In some embodiments, the first recess 23 penetrates through the casing 20 in the third direction Y.

In some embodiments, the third casing wall 25 is an irregularly shaped wall. Exemplarily, the third casing wall 25 includes a first sub-wall 251 and a second sub-wall 252 arranged in the second direction X, where the first sub-wall 251 is connected to the first casing wall 21, the second casing wall 22, and a side wall 232 of the first recess 23. The second sub-wall 252 extends from one end of the first sub-wall 251 in the second direction X, and the second sub-wall 252 connects the bottom wall 231 of the first recess 23 and the first casing wall 21.

In some embodiments, in the third direction Y, the body part 11 is located between two first sub-walls 251, and at least a portion of the first tab 12 is located between two second sub-walls 252.

In some embodiments, the electrode assembly 10 further includes a second tab 13, where the first tab 12 and the second tab 13 have opposite polarities. Exemplarily, the second tab 13 includes a portion of the second current collector 151 that is not coated with the second active substance layer 152.

The second tab 13 and the first tab 12 may extend from the same end of the body part 11 in the second direction X, or may extend from opposite ends of the body part 11 in the second direction X, respectively.

In some embodiments, the first tab 12 and the second tab 13 extend respectively from opposite ends of the body part 11 in the second direction X, so as to reduce the risk of short circuiting between the first tab 12 and the second tab 13.

In some embodiments, L₁/L₂ is from 0.5 to 0.8. Alternatively, L₁/L₂ is 0.5, 0.6, 0.7, or 0.8.

The first tab 12 and the second tab 13 extend respectively from opposite ends of the body part 11 in the second direction X, and they may share space in the third direction Y; therefore, the first tab 12 can have a larger dimension in the third direction Y, thereby improving the current-carrying capacity of the first tab 12 and reducing temperature rise of the first tab 12.

In some embodiments, in the third direction Y, the dimension of the body part 11 is L₃ mm, and L₃/L₂ is from 0.9 to 0.99. Alternatively, L₃/L₂ is 0.9, 0.91, 0.92, 0.93, 0.94, 0.95, 0.96, 0.97, 0.98 or 0.99.

The embodiments of the present application can improve the space utilization of the body part 11 in the third direction Y and reduce the difficulty of inserting the body part 11 between the two third casing walls 25.

In some embodiments, L₃/L₂ is from 0.95 to 0.98.

In some embodiments, the battery cell 6 further includes a first electrode lead-out piece 30 arranged on the first casing wall 21 and electrically connected to the first tab 12.

Exemplarily, the first electrode lead-out piece 30 may be used to electrically connect the electrode assembly 10 with an external current of the battery cell, thereby enabling charging and discharging of the battery cell.

In some embodiments, at least a portion of the first electrode lead-out piece 30 is located outside the first casing wall 21. The portion of the first electrode lead-out piece 30 located outside the first casing wall 21 may be used for electrical connection with other components, such as the busbar component of the battery.

In some embodiments, in the first direction Z, a projection of the portion of the first electrode lead-out piece 30 located outside the first casing wall 21 at least partially overlaps with a projection of the first recess 23.

When a plurality of battery cells 6 are arranged in the first direction Z, the first recess 23 of one battery cell 6 may provide clearance for the first electrode lead-out piece 30 (or the second electrode lead-out piece described later) of another battery cell 6, thereby improving space utilization and enhancing the energy density of the battery.

In some embodiments, in the first direction Z, the projection of the portion of the first electrode lead-out piece 30 located outside the first casing wall 21 is entirely within the projection of the first recess 23.

In some embodiments, the first electrode lead-out piece 30 includes a first connecting plate 31 accommodated in the casing 20, where at least part of the first tab 12 overlaps and is connected with the first connecting plate 31 in the first direction Z. In the third direction Y, the dimension of the first tab 12 is L₁ mm, the dimension of the first connecting plate 31 is L₄ mm, and L₁/L₄ is from 0.6 to 1. The first direction Z, the second direction X, and the third direction Y are mutually perpendicular.

The embodiments of the present application define L₁/L₄ to be greater than or equal to 0.6 to increase the connection area between the first tab 12 and the first connecting plate 31, improve the current-carrying capacity between them, and reduce temperature rise. The embodiments of the present application define L₁/L₄ to be smaller than or equal to 1 to reduce space waste caused by the first tab 12 and improve space utilization.

In some embodiments, L₁/L₄ is between 0.8 and 0.9. L₁/L₄ is defined to be smaller than or equal to 0.9 to reduce the risk that the first tab 12 protrudes beyond the first connecting plate 31 in the third direction Y due to assembly tolerance, thereby reducing space waste.

In some embodiments, the first tab 12 is welded to the first connecting plate 31.

In some embodiments, at least part of the first tab 12 is located on a side of the first connecting plate 31 faced away from the first casing wall 21 and is connected to the first connecting plate 31.

In some embodiments, the first connecting plate 31 is located on one side of the body part 11 in the second direction X.

In some embodiments, the first tab 12 includes a first portion 121, a bent portion 122, and a second portion 123, where the first portion 121 is connected to the body part 11, located on a side of the first connecting plate 31 faced away from the first casing wall 21, and connected to the first connecting plate 31; the bent portion 122 extends from an end of the first portion 121 away from the body part 11 and is bent relative to the first portion 121; and the second portion 123 extends from an end of the bent portion 122 away from the first portion 121 toward the body part 11.

The first tab 12 may fold back at an end of the first connecting plate 31 away from the body part 11, which can reduce the space occupied by the first tab 12 in the second direction X and improve space utilization.

In some embodiments, the first tab 12 further includes a converging portion 124, where the converging portion 124 is connected between the first portion 121 and the body part 11.

Exemplarily, the first tab 12 includes a plurality of conductive layers arranged in a stacked configuration, the plurality of conductive layers converge and are stacked on the first connecting plate 31, and then the plurality of conductive layers are welded to the first connecting plate 31. Root portions of the plurality of conductive layers converge and form the converging portion 124.

In some embodiments, the first electrode lead-out piece 30 further includes a second connecting plate 32, where the second connecting plate 32 extends from an end of the first connecting plate 31 adjacent to the body part 11 toward the first casing wall 21.

Exemplarily, the second connecting plate 32 may separate the body part 11 from the second portion 123 in the second direction X, thereby reducing the risk of the first tab 12 being inserted into the body part 11 and improving the reliability of the battery cell 6.

In some embodiments, the first electrode lead-out piece 30 further includes a third connecting plate 33, where the third connecting plate 33 is connected to an end of the second connecting plate 32 away from the first connecting plate 31 and is located between the first casing wall 21 and the first connecting plate 31.

Exemplarily, the third connecting plate 33, the second connecting plate 32, and the second connecting plate 32 define an accommodating space for accommodating the second portion 123, thereby reducing the risk of contact between the second portion 123 and the casing 20.

In some embodiments, the third connecting plate 33, the second connecting plate 32, and the second connecting plate 32 form an integral C-shaped structure.

In some embodiments, the first electrode lead-out piece 30 further includes a first electrode terminal 34 connected to the third connecting plate 33 and penetrating through the first casing wall 21.

There may be one or more first electrode terminals 34.

The first electrode terminal 34 and the third connecting plate 33 may be an integrally molded structure, or may be connected to the third connecting plate 33 by welding, riveting, or other methods.

The first electrode terminal 34 penetrates through the first casing wall 21 to lead current out to the exterior of the battery cell 6.

In some embodiments, the first electrode lead-out piece 30 further includes a first terminal plate 35, the first terminal plate 35 being located on a side of the first casing wall 21 faced away from the first tab 12 and connected to the first electrode terminal 34.

By providing the first terminal plate 35, electrical connection with external conductive structures is facilitated, thereby improving the current-carrying capacity.

Exemplarily, the first terminal plate 35 may be used to connect with a busbar component. Alternatively, the first terminal plate 35 and the busbar component are arranged in the second direction X and connected.

In some embodiments, in the first direction Z, the projection of the first terminal plate 35 is located within the projection of the first recess 23. When a plurality of battery cells 6 are arranged in the first direction Z, the first recess 23 of one battery cell 6 can provide clearance for the first terminal plate 35 of another battery cell 6, thereby improving space utilization and enhancing energy density of the battery.

In some embodiments, the first terminal plate 35 includes a first terminal portion 351 and a second terminal portion 352, the first terminal portion 351 being connected to the first electrode terminal 34, the second terminal portion 352 protruding from a surface of the first terminal portion 351 faced away from the first casing wall 21.

Both the first terminal portion 351 and the second terminal portion 352 can be used to connect to the busbar component; by providing the second terminal portion 352, a connection area between the first terminal plate 35 and the busbar component is increased.

In some embodiments, the end surface of the first terminal portion 351 facing the busbar component in the second direction X is flush with the end surface of the second terminal portion 352 facing the busbar component in the second direction X.

In some embodiments, the first connecting plate 31, the second connecting plate 32, the third connecting plate 33, and the first electrode terminal 34 form an integrally molded structure.

In some embodiments, the first electrode terminal 34 is riveted to the first terminal plate 35. Exemplarily, the first electrode terminal 34 is riveted to the first terminal portion 351.

In some embodiments, the battery cell 6 further includes an insulating bracket 40 accommodated in the casing 20 and provided with the body part 11 in the second direction X. A first accommodating recess 40a is provided on a side of the insulating bracket 40 facing the body part 11.

In some embodiments, at least a portion of the first tab 12 is accommodated in the first accommodating recess 40a.

The insulating bracket 40 can accommodate the first tab 12 and separate at least a portion of the first tab 12 from the casing 20, thereby reducing the risk of short circuit. The first accommodating recess 40a can also confine the first tab 12, thereby reducing the risk of spreading of the first tab 12.

In some embodiments, at least a portion of the first tab 12 extends into the first accommodating recess 40a and is bent within the first accommodating recess 40a.

The wall of the first accommodating recess 40a can guide the bending of the first tab 12, thereby reducing the space occupied by the first tab 12 in the second direction X, lowering the risk of contact between the first tab 12 and the casing 20 during bending, and improving reliability.

In some embodiments, in the second direction X, the first connecting plate 31 is located between the insulating bracket 40 and the body part 11, and an end of the first connecting plate 31 away from the body part 11 extends into the first accommodating recess 40a. The first tab 12 is bent at the end of the first connecting plate 31 away from the body part 11 within the first accommodating recess 40a.

The wall of the first accommodating recess 40a can guide the first tab 12 to bend at the end of the first connecting plate 31 away from the body part 11, thereby reducing the space occupied by the first tab 12 in the second direction X.

In some embodiments, the bent portion 122 is accommodated in the first accommodating recess 40a.

In some embodiments, in the first direction Z, a portion of the insulating bracket 40 is located between the first electrode lead-out piece 30 and the first casing wall 21.

The first electrode lead-out piece 30 and the first casing wall 21 can position the insulating bracket 40 in the first direction Z, reducing the risk of the insulating bracket 40 shaking inside the casing 20 when the battery cell 6 is subjected to external impact.

In some embodiments, the insulating bracket 40 includes an insulating substrate 41, a first limiting plate 42, and a second limiting plate 43, where the insulating substrate 41 is spaced apart from the body part 11 in the second direction X. The first limiting plate 42 and the second limiting plate 43 are located on the side of the insulating substrate 41 facing the body part 11 and are spaced apart in the first direction Z, where the second direction X is perpendicular to the first direction Z. The first accommodating recess 40a is located between the first limiting plate 42 and the second limiting plate 43. In the first direction Z, the bent portion 122 is located between the first limiting plate 42 and the second limiting plate 43. The second portion 123 is located on a side of the first portion 121 adjacent to the second limiting plate 43.

The first limiting plate 42 and the second limiting plate 43 can provide positioning and insulation for the first tab 12, thereby reducing the risk of electrical conduction between the first tab 12 and the casing 20, improving reliability.

In some embodiments, at least part of the first limiting plate 42 is located between the first portion 121 and the bottom wall 231 of the first recess 23, so as to insulate and isolate the first portion 121 from the bottom wall 231.

In some embodiments, the second limiting plate 43 is located on a side of the first limiting plate 42 facing the first casing wall 21.

In some embodiments, the thickness of the second limiting plate 43 is greater than the thickness of the first limiting plate 42. The second limiting plate 43 supports the second portion 123 and needs to withstand the stress generated by bending the first tab 12; therefore, the second limiting plate 43 may have a larger thickness relative to the first limiting plate 42 to provide effective support for the first tab 12 and reduce the risk of deformation of the second limiting plate 43. The first limiting plate primarily serves an insulating function and may have a smaller thickness relative to the second limiting plate 43 to reduce the weight of the insulating bracket 40.

In some embodiments, in the second direction X, the end of the first limiting plate 42 facing the body part 11 extends beyond the end of the second limiting plate 43 facing the body part 11, thereby insulating the first portion 121 from the casing 20. The second limiting plate 43 may have a smaller dimension in the second direction X than the first limiting plate 42 to reduce the weight of the insulating bracket 40.

In some embodiments, a portion of the insulating bracket 40 is located between the third connecting plate 33 and the first casing wall 21.

The third connecting plate 33 and the first casing wall 21 can position the insulating bracket 40 in the first direction Z, reducing the risk of the insulating bracket 40 shaking inside the casing 20 when the battery cell 6 is subjected to external impact.

In some embodiments, the insulating bracket 40 is fixed to the first casing wall 21.

In some embodiments, the first electrode lead-out piece 30 fixes the insulating bracket 40 to the first casing wall 21.

In some embodiments, the insulating bracket 40 further includes a third limiting plate 44, which is located on the side of the second limiting plate 43 facing the first casing wall 21 and connected to the insulating substrate 41. In the first direction Z, at least a portion of the third connecting plate 33 is located between the second limiting plate 43 and the third limiting plate 44, and at least a portion of the third limiting plate 44 is located between the first casing wall 21 and the third connecting plate 33.

By providing the third limiting plate 44, the first casing wall 21 and the third connecting plate 33 can conveniently limit the position of the insulating bracket 40. The third connecting plate 33 can utilize the space between the second limiting plate 43 and the third limiting plate 44, thereby improving space utilization.

Exemplarily, the third limiting plate 44, the second limiting plate 43, and the insulating substrate 41 cooperatively define a second accommodating recess 40b, where at least a portion of the third connecting plate 33 is provided in the second accommodating recess 40b.

In some embodiments, the battery cell 6 further includes an insulating member 50, which is used to electrically isolate the first electrode lead-out piece 30 from the first casing wall 21.

In some embodiments, at least a portion of the insulating member 50 is located between the first casing wall 21 and the third connecting plate 33. The third limiting plate 44 is connected to the insulating member 50.

In some embodiments, the casing 20 is provided with a second recess 24 at its end in the second direction X, where the second recess 24 is recessed relative to the surface of the second casing wall 22 faced away from the first casing wall 21. The first recess 23 and the second recess 24 are respectively located on opposite sides of the second casing wall 22 in the second direction X.

In some embodiments, in the first direction Z, at least a portion of the second electrode tab 13 is located between the bottom wall of the second recess 24 and the first casing wall 21.

In some embodiments, the battery cell 6 further includes a second electrode lead-out piece 80 arranged on the first casing wall 21 and electrically connected to the second electrode tab 13.

In some embodiments, at least a portion of the second electrode lead-out piece 80 is located outside the first casing wall 21.

In some embodiments, in the first direction Z, the projection of the portion of the second electrode lead-out piece 80 located outside the first casing wall 21 falls within the projection of the second recess 24.

Exemplarily, when two battery cells 6 are arranged in the first direction Z and need to be connected in parallel, the first recess 23 of one battery cell 6 can provide clearance for the first electrode lead-out piece 30 of the other battery cell 6, and the second recess 24 of the one battery cell 6 can provide clearance for the second electrode lead-out piece 80 of the other battery cell 6.

When two battery cells 6 are arranged in the first direction Z and need to be connected in series, the first recess 23 of one battery cell 6 can provide clearance for the second electrode lead-out piece 80 of the other battery cell 6, and the second recess 24 of the one battery cell 6 can provide clearance for the first electrode lead-out piece 30 of the other battery cell 6.

In some embodiments, the second electrode lead-out piece 80 includes a fourth connecting plate 81 accommodated in the casing 20, where at least a portion of the second electrode tab 13 overlaps and is connected with the fourth connecting plate 81 in the first direction Z.

In some embodiments, the fourth connecting plate 81 is made of copper, and the first connecting plate 31 is made of aluminum. The ratio of the thickness of the fourth connecting plate 81 to the thickness of the first connecting plate 31 is from 0.4 to 1. Copper has better current-carrying capacity than aluminum; thus, the disclosed embodiments can reduce copper usage while meeting current-carrying requirements, thereby saving costs.

In some embodiments, the AC internal resistance of the battery cell 6 is smaller than or equal to 1 milliohm.

Exemplarily, the internal resistance of the battery cell 6 can be measured as follows: a 5s alternating current signal with a frequency of 1.0 kHz and an effective value of Ia is applied to the battery cell 6, and the AC effective voltage Ua is measured. The AC internal resistance Rac is Ua/Ia.

A smaller AC internal resistance of the battery cell 6 reduces heat generation of the battery cell 6, thereby improving the cycle performance of the battery cell.

In some embodiments, the second casing wall 22 is made of aluminum or steel. Aluminum and steel have high strength and good thermal conductivity; using the second casing walls 22 made of aluminum or steel can improve the cycle performance of the battery cell and enhance its reliability.

In some embodiments, the first casing wall 21 is made of aluminum or steel. Aluminum and steel have high strength and good thermal conductivity; using aluminum or steel for the first casing walls 21 can improve the cycle performance of the battery cell and enhance its reliability.

In some embodiments, the electrode assembly is a stacked structure.

In some embodiments, the electrode assembly 10 includes a plurality of first pole pieces 14 and a plurality of second pole pieces 15, the polarity of the first pole piece 14 being opposite to the polarity of the second pole piece 15, the plurality of first pole pieces 14 and the plurality of second pole pieces 15 being alternately stacked in the first direction Z.

Adopting the stacked structure for the electrode assembly 10 can improve space utilization and increase the energy density of the battery cell.

In some embodiments, the casing 20 includes a housing 20a and a cover plate 20b provided in the first direction Z, where the housing 20a has an opening, and the cover plate 20b covers the opening. The housing 20a includes the second casing wall 22, and the cover plate 20b includes the first casing wall 21.

The housing 20a and the cover plate 20b can be joined together to form an accommodation space for accommodating the electrode assembly. The housing 20a and the cover plate 20b are easy to manufacture and assemble.

In some embodiments, the housing 20a includes two third casing walls 25.

In some embodiments, the first recess 23 and the second recess 24 are provided on the housing 20a.

In some embodiments, the housing 20a is welded to the cover plate 20b.

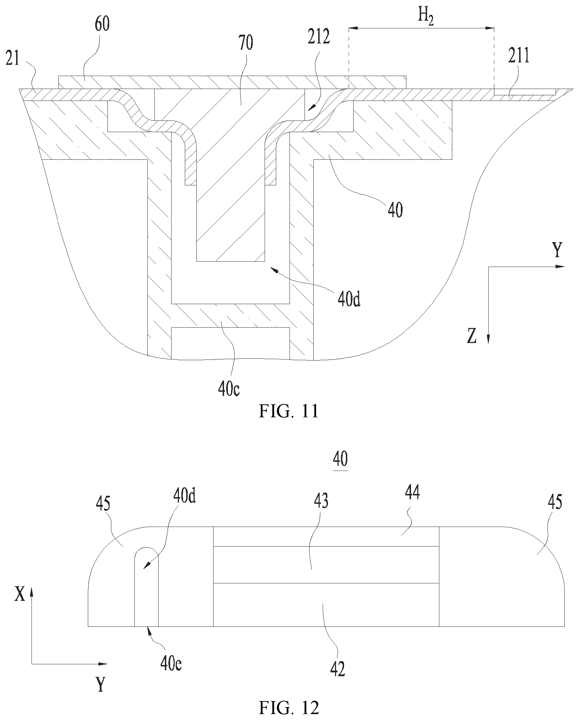

FIG. 10 is a schematic diagram of a battery cell according to some embodiments of the present application; and FIG. 11 is a local cross-sectional schematic diagram of a battery cell at a liquid injection hole according to some embodiments of the present application.

As shown in FIGS. 10 and 11, in some embodiments, the dimension of the first casing wall 21 in the second direction X is D₄ mm, and the dimension of the first casing wall 21 in the third direction Y is D₅ mm. D₄>D₅>D₁.

In some embodiments, the first casing wall 21 is rectangular. It should be understood that "rectangular" includes not only standard rectangles but also shapes substantially rectangular as conventionally recognized; for example, the first casing wall 21 may still be considered rectangular even if rounded corners are provided at its four corners.

In some embodiments, the area of the first outer surface 213 of the first casing wall 21 is D₄×D₅.

In some embodiments, the first casing wall 21 is provided with a pressure relief mechanism 211.

There may be one or more pressure relief mechanisms 211.

The pressure relief mechanism 211 has a significant impact on the reliability of the battery cell. For example, when a phenomenon such as a short circuit, overcharge, etc. occurs, it is possible to cause thermal runaway in a battery cell, thereby increasing a pressure rapidly. In this case, the internal pressure may be externally released by actuating the pressure relief mechanism 211 to reduce a risk of explosion or ignition of a battery cell.

The pressure relief mechanism 211 refers to an element or component that is actuated when the internal pressure of the battery cell reaches a predetermined threshold value to relieve the internal pressure. The threshold value design varies depending on design requirements. The threshold may depend on the material(s) of one or more of the positive electrode sheet, negative electrode sheet, electrolyte, and separator in the battery cell.

In some examples, the first casing wall 21 and the pressure relief mechanism 211 are an integrally molded structure. In alternative examples, the pressure relief mechanism 211 and the first casing wall 21 are separately molded components and may be connected by welding, bonding, or the like. For example, the first casing wall 21 is provided with a pressure relief hole that penetrates the first casing wall 21, and the pressure relief mechanism 211 is installed at the first casing wall 21 and covers the pressure relief hole, to separate inner-side space and outer-side space of the first casing wall 21.

In some embodiments, the first casing wall 21 and the pressure relief mechanism 211 are integrally molded, and the pressure relief mechanism 211 includes a weak portion.

The strength of the weak portion is less than that of other portions of the first casing wall 21, and the weak portion is a part that is prone to rupture, breakage, tearing, or opening.

In some examples, grooves, scores, or other structures may be formed in a predetermined area of the first casing wall 21 to reduce the local strength of the first casing wall 21, thereby forming a weak portion on the first casing wall 21. For example, a predetermined area of the first casing wall 21 is performed thinning treatment, and the thinned portion of the first casing wall 21 forms the weak portion. In some other examples, a predetermined region of the first casing wall 21 may be subjected to material processing, so that the region has a strength weaker than that of other regions, in other words, the region is the weak portion.

The first casing wall 21 and the pressure relief mechanism 211 being integrally molded can not only eliminate the connection process between the first casing wall 21 and the pressure relief mechanism 211 but also improve the connection strength between them.

In some embodiments, in the first direction Z, the pressure relief mechanism 211 does not overlap with the body part 11. The embodiments of the present application can reduce the risk of the body part 11 blocking the pressure relief mechanism 211 when thermal runaway occurs in the battery cell 6, thereby enabling timely pressure release and improving the reliability of the battery cell 6.

In some embodiments, a minimum distance H₁ between the pressure relief mechanism 211 and an edge of the first casing wall 21 is from 2 mm to 5 mm. Alternatively, H₁ is 2 mm, 3 mm, 4 mm, or 5 mm.

The embodiments of the present application set H₁ to be greater than or equal to 2 mm, so as to reduce the force applied to the pressure relief mechanism 211 when the edge of the first casing wall 21 is impacted, thereby lowering the risk of rupture or failure of the pressure relief mechanism 211 and improving reliability. H₁ is set to be smaller than or equal to 5 mm to reduce the risk of the pressure relief mechanism 211 being blocked by the body part 11.

In some embodiments, the first casing wall 21 is provided with a liquid injection hole 212. During the manufacturing process of the battery cell, electrolyte may be injected into the casing 20 through the liquid injection hole 212.

There may be one or more liquid injection holes 212.

In some embodiments, the minimum distance H₂ between the pressure relief mechanism 211 and the liquid injection hole 212 is greater than or equal to 1 mm.

During the liquid injection process, the area around the liquid injection hole 212 is subjected to compression from the injection equipment and impact from the electrolyte; the embodiments of the present application can reduce the stress transmitted to the pressure relief mechanism 211, lower the risk of rupture or failure of the pressure relief mechanism 211, and improve reliability.

In some embodiments, the battery cell 6 includes a first seal 60 connected to the first casing wall 21 and covering the liquid injection hole 212 from an outer side to seal the liquid injection hole 212.

Exemplarily, the first seal 60 is welded to the first casing wall 21.

In some embodiments, the battery cell 6 includes a second seal 70 inserted into the liquid injection hole 212 and being in interference fit with the liquid injection hole 212.

Exemplarily, the second seal 70 includes a rubber pin.

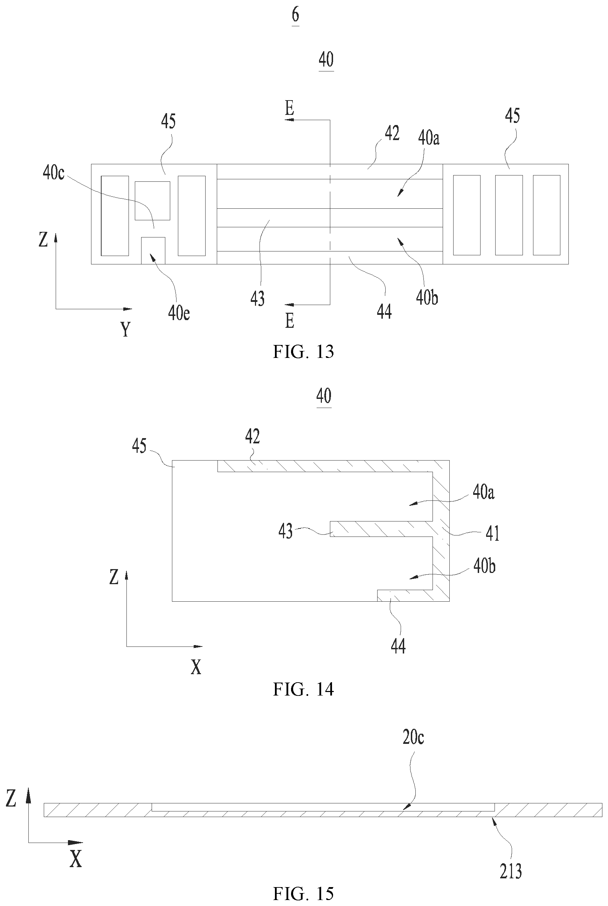

FIG. 12 is a schematic structural diagram of an insulating bracket according to some embodiments of the present application; FIG. 13 is a schematic structural diagram of an insulating bracket shown in FIG. 12 from another perspective; and FIG. 14 is a cross-sectional schematic diagram taken along direction E-E in FIG. 13.

With reference to FIGS. 11 to 14, in some embodiments, the insulating bracket 40 is provided with a liquid injection channel 40d, and the liquid injection channel 40d communicates with the space between the body part 11 and the insulating bracket 40. A peripheral wall of the liquid injection channel 40d includes a flow guiding wall 40c, and in the axial direction of the liquid injection hole 212, the liquid injection hole 212 is aligned with the flow guiding wall 40c, and the liquid injection channel 40d is located on the side of the flow guiding wall 40c facing the liquid injection hole 212.

The flow guiding wall 40c of the insulating bracket 40 can withstand the impact of the electrolyte and guide the flow of the electrolyte within the liquid injection channel 40d, thereby reducing the impact of the electrolyte on the body part 11 and minimizing deformation of the separator.

In some embodiments, the liquid injection channel 40d forms a liquid injection opening 40e on the surface of the insulating bracket 40 facing the body part 11. The electrolyte can flow out through the liquid injection opening 40e and wet the body part 11.

In some embodiments, the insulating bracket 40 includes two support blocks 45, and in the third direction, the first limiting plate 42, the second limiting plate 43, and the third limiting plate 44 are provided between the two support blocks 45 and connected to the two support blocks 45.

In some embodiments, the liquid injection channel 40d is provided on the support block 45.

FIG. 15 is a cross-sectional schematic diagram of a cover plate of a battery cell according to some embodiments of the present application.

As shown in FIGS. 8 and 15, the surface of the cover plate 20b facing the housing 20a is provided with a positioning groove 20c, and a portion of the body part 11 is accommodated in the positioning groove 20c.

During assembly, the positioning groove 20c can position the body part 11, improving assembly efficiency.

Exemplarily, by positioning the body part 11 via the positioning groove 20c, the positioning accuracy between the first tab 12 and the first connecting plate 31 can be improved, reducing the risk of false welding.

According to some embodiments of the present application, the present application further provides a battery including a plurality of the battery cells according to any one of the foregoing embodiments.

According to some embodiments of the present application, the present application further provides an electrical device including the battery cell according to any one of the foregoing embodiments, where the battery cell is configured to supply electric power to the electrical device. The electrical device may be any of the foregoing devices or systems employing the battery cell.

With reference to FIGS. 4 to 10, an embodiment of the present application provides a battery cell 6, which includes an electrode assembly 10 and a casing 20.

The casing 20 includes a housing 20a and a cover plate 20b provided in the first direction Z, where the housing 20a has an opening, and the cover plate 20b covers the opening. The cover plate 20b includes a first casing wall 21, and the housing 20a includes a second casing wall 22, the first casing wall 21 and the second casing wall 22 being oppositely arranged in the first direction Z.

At both ends of the housing 20a in the second direction X, a first recess 23 and a second recess 24 are respectively provided, the first recess 23 being recessed from the second casing wall 22 toward the first casing wall 21, and the second recess 24 being recessed from the second casing wall 22 toward the first casing wall 21. The area of the second outer surface 221 of the second casing wall 22 is smaller than the area of the first outer surface 213 of the first casing wall 21.

The electrode assembly 10 is accommodated in the casing 20 and includes a body part 11, a first tab 12, and a second tab 13, the first tab 12 and the second tab 13 respectively extending out from both ends of the body part 11 in the second direction X, the body part 11 being located between the first casing wall 21 and the second casing wall 22 in the first direction Z, the second direction X being perpendicular to the first direction Z.

In the first direction Z, at least a portion of the first tab 12 is located between the bottom wall of the first recess 23 and the first casing wall 21, and at least a portion of the second tab 13 is located between the bottom wall of the second recess 24 and the first casing wall 21.

The distance between the first casing wall 21 and the second casing wall 22 in the first direction Z is D₁ mm, the dimension of the second casing wall 22 in the second direction X is D₂ mm, and the dimension of the second casing wall 22 in the third direction Y is D₃ mm. D₂/D₃ is from 5 to 7, and D₃/D₁ is from 3 to 5.

According to some embodiments of the present application, a battery cell is further provided, which includes a casing, an electrode assembly, and a first electrode lead-out piece. The casing includes a first casing wall and a second casing wall which are oppositely arranged in a first direction, and an area of a second outer surface of the second casing wall is smaller than or equal to an area of a first outer surface of the first casing wall. The electrode assembly is accommodated in the casing and includes a body part and a first tab, the body part is located between the first casing wall and the second casing wall in the first direction, the first tab extends out from at least one end of the body part in a second direction, and the second direction intersects with the first direction.

The first electrode lead-out piece is provided on the first casing wall. The first electrode lead-out piece includes a first connecting plate, a second connecting plate, a third connecting plate, a first electrode terminal, and a first terminal plate, which are located on a side of the first casing wall faced away from the first tab and connected to the first electrode terminal. The first connecting plate is accommodated in the casing, at least a portion of the first tab is located on a side of the first connecting plate faced away from the first casing wall and is connected to the first connecting plate. The second connecting plate extends from an end of the first connecting plate adjacent to the body part toward the first casing wall. The third connecting plate is connected to an end of the second connecting plate away from the first connecting plate and is located between the first casing wall and the first connecting plate. The first electrode terminal is connected to the third connecting plate and passes through the first casing wall. The first terminal plate is located on a side of the first casing wall faced away from the first tab and is connected to the first electrode terminal.

Alternatively, a distance between the first casing wall and the second casing wall in the first direction is D₁ mm, the area of the second outer surface of the second casing wall is S mm², and S is 36 to 500 times the square of D₁.

### Examples

The following examples describe the disclosure of the present application more specifically. These examples are used only for illustration, since various modifications and changes made within the scope of the disclosure of the present application are obvious to those skilled in the art. Unless otherwise stated, all parts, percentages and ratios reported in the following example are on a mass basis. All reagents used in the examples are commercially available or can be synthesized according to conventional methods, and used directly without further processing. The instruments used in the example are commercially available.

### Embodiment 1.

(i) Preparation of the positive electrode sheet
   The active substance (e.g., lithium iron phosphate) was mixed with binder, conductive carbon, dispersant, and surfactant in a ratio of 97.5:1.8:0.4:0.3, with NMP (N-methylpyrrolidone) used as the solvent, and the mixture was stirred to form a uniformly dispersed slurry; the slurry was uniformly coated onto an Al foil, and then dried and cold-pressed to obtain a target positive electrode sheet, with the coating weight alternatively being 350 mg/1540.25 mm² and the cold-pressing density alternatively being 2.6 g/cc;
(ii) Preparation of the negative electrode sheet
   The active substance (e.g., graphite) was mixed with binder, conductive carbon, and dispersant in a ratio of 97.2:1.2:0.7:0.9, with deionized water used as the solvent, and the mixture was stirred to form a uniformly dispersed slurry; the slurry was uniformly coated onto a Cu foil, and then dried and cold-pressed to obtain a target negative electrode sheet, with the coating weight alternatively being 165 mg/1540.25 mm² and the cold-pressing density alternatively being 1.6 g/cc;
(iii) Preparation of the separator
   A 7 µm polyethylene film was used;
(iv) Preparation of the electrolyte
   Ethylene carbonate (EC), ethyl methyl carbonate (EMC), and diethyl carbonate (DEC) were mixed at a volume ratio of 1: 1: 1 to obtain an organic solvent, and sufficiently dried lithium salt LiPF₆ was dissolved in the mixed organic solvent to prepare an electrolyte having a concentration of 1 mol/L;
(v) Preparation of the electrode assembly
   The positive electrode sheet, the separator, and the negative electrode sheet are wound to form an electrode assembly;
(vi) Preparation of the battery cell
   The electrode assembly were placed into a housing, and the housing and the cover plate are welded; after drying, the electrolyte was injected, and performed vacuum packaging, standing, formation, shaping, insulating film wrapping, and other processes to obtain the battery cell.

Exemplarily, with reference to FIGS. 4 to 6, the distance between the first casing wall 21 and the second casing wall 22 in the first direction Z is D₁ mm, the dimension of the second casing wall 22 in the second direction X is D₂ mm, and the dimension of the second casing wall 22 in the third direction Y is D₃ mm. D₁, D₂ and D₃ are 23, 276 and 69, respectively.

Embodiments 2-10 and Comparative Examples 1-4 are as shown in Table 1 below.

### Test Section

### I. Temperature test:

Under a constant temperature environment of 25°C, five charge-discharge cycles are performed on the battery cell using a charge-discharge machine, with both the charging rate and discharging rate being 1C. During the charge-discharge cycles, temperatures at a plurality of locations of the battery cell are monitored, and the highest temperature is recorded.

### II. Rigidity test

The cover plate of the battery cell is placed downward, and the battery cell is fixed. In the length direction (second direction), the distance between a fixing point of the battery cell and one end of the battery cell is 115 of the total length of the battery cell.

A press applies a downward force from the upper side of the battery cell, and the distance between the force application point and the fixing point in the length direction is 3/5 of the total length of the battery cell.

During continuous pressing, the portion of the battery cell between the force application point and the fixing point tilts; when the tilt angle reaches 10°, the force value is recorded.

**Table 1**

| | D₁ | D₂ | D₃ | S | S/Di² | Maximum temperature | Pressure |
|---|---|---|---|---|---|---|---|
| Example 1 | 23 | 276 | 69 | 19044 | 36 | 56°C | 2800N |
| Example 2 | 23 | 345 | 69 | 23805 | 45 | 55°C | 2560N |
| Example 3 | 23 | 460 | 92 | 42320 | 80 | 45°C | 2030N |
| Example 4 | 23 | 560 | 92 | 51520 | 97 | 39°C | 1470N |
| Example 5 | 23 | 644 | 92 | 59248 | 112 | 33°C | 1230N |
| Example 6 | 23 | 805 | 115 | 92575 | 175 | 32°C | 830N |
| Example 7 | 23 | 1242 | 138 | 171396 | 324 | 31°C | 475N |
| Example 8 | 23 | 1380 | 138 | 190440 | 360 | 29°C | 380N |
| Example 9 | 23 | 1449 | 161 | 233289 | 441 | 28°C | 320N |
| Example 10 | 23 | 1642 | 161 | 264362 | 500 | 25°C | 200N |
| Comparative Example 1 | 23 | 207 | 69 | 14283 | 27 | 59°C | 3080N |
| Comparative Example 2 | 23 | 276 | 46 | 12696 | 24 | 62°C | 3220N |
| Comparative Example 3 | 23 | 1771 | 161 | 285131 | 539 | 25°C | 103N |
| Comparative Example 4 | 23 | 1771 | 184 | 325864 | 616 | 25°C | 94N |

With reference to Embodiments 1-10 and Comparative Examples 1-2, S is set to be greater than or equal to 36 times the square of D1 to improve the heat dissipation efficiency of the battery cell 6, reduce heat accumulation within the battery cell, lower temperature rise during charge and discharge processes, and thereby improve cycle performance and cycle life of the battery cell.

With reference to Embodiments 1-10 and Comparative Examples 3-4, S is set to be smaller than or equal to 500 times the square of D₁ can improve the rigidity and structural strength of the battery cell 6, reduce deformation of the battery cell 6 under external impact, enhance the anti-deformation capability of the battery cell, and improve the reliability of the battery cell 6.

Although this application has been described with reference to some preferred embodiments, various modifications to this application and replacements of the components therein with equivalents can be made without departing from the scope of this application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A battery cell, comprising:
a casing comprising a first casing wall and a second casing wall which are oppositely arranged in a first direction, and an area of a second outer surface of the second casing wall being smaller than or equal to an area of a first outer surface of the first casing wall;
an electrode assembly accommodated in the casing and comprising a body part and a first tab, the body part being located between the first casing wall and the second casing wall in the first direction, the first tab extending out from at least one end of the body part in a second direction, and the second direction intersecting with the first direction;
wherein a distance between the first casing wall and the second casing wall in the first direction is D₁ mm, the area of the second outer surface of the second casing wall is S mm², and S is 36 to 500 times the square of D₁.

2. The battery cell according to claim 1, wherein S/D₁² is from 45 to 175.

3. The battery cell according to claim 1 or 2, wherein a dimension of the second casing wall in the second direction is D₂ mm, a dimension of the second casing wall in a third direction is D₃ mm, and the first direction, the second direction, and the third direction are mutually perpendicular; and
D₁, D₂ and D₃ satisfy: D₂>D₃>D₁.

4. The battery cell according to claim 3, wherein D₂/D₃ is from 4 to 10.2; alternatively, D₂/D₃ is from 5 to 7.

5. The battery cell according to claim 3 or 4, wherein D₃/D₁ is from 3 to 7; alternatively, D₃/D₁ is from 3 to 5.

6. The battery cell according to any one of claims 3 to 5, wherein D₂ is from 300 to 3000; alternatively, D₂ is from 500 to 1000.

7. The battery cell according to any one of claims 1 to 6, wherein energy of the battery cell is 150×D₁×S×10⁻⁶ -600×D₁×S×10⁻⁶, with a unit of energy being Wh.

8. The battery cell according to any one of claims 1 to 7, wherein a thickness of the second casing wall is from 0.1 mm to 0.8 mm; alternatively, the thickness of the second casing wall is from 0.2 mm to 0.5 mm; further alternatively, the thickness of the second casing wall is 0.3 mm.

9. The battery cell according to any one of claims 1 to 8, wherein the area of the second outer surface of the second casing wall is smaller than the area of the first outer surface of the first casing wall;
the casing is provided at an end in the second direction with a first recess, the first recess being formed by the second casing wall recessing toward the first casing wall;
in the first direction, at least a portion of the first tab is located between a bottom wall of the first recess and the first casing wall.

10. The battery cell according to claim 9, wherein
the casing comprises two third casing walls oppositely arranged in the third direction, each of the third casing walls being connected to the first casing wall and the second casing wall, the first direction, the second direction, and the third direction being mutually perpendicular;
in the third direction, at least a portion of the first tab is located between the two third casing walls; and
in the third direction, a dimension of the first tab is L₁ mm, a distance between the two third casing walls is L₂ mm, and L₁/L₂ is from 0.2 to 0.9.

11. The battery cell according to claim 10, wherein L₁/L₂ is from 0.5 to 0.8.

12. The battery cell according to claim 10 or 11, wherein in the third direction, the dimension of the body part is L₃ mm, and L₃/L₂ is from 0.9 to 0.99; alternatively, L₃/L₂ is from 0.95 to 0.98.

13. The battery cell according to any one of claims 9 to 12, further comprising a first electrode lead-out piece arranged on the first casing wall and electrically connected to the first tab;
at least a portion of the first electrode lead-out piece is located outside the first casing wall; in the first direction, a projection of the portion of the first electrode lead-out piece located outside the first casing wall at least partially overlaps with a projection of the first recess.

14. The battery cell according to any one of claims 1 to 13, wherein
the battery cell further comprises the first electrode lead-out piece arranged on the first casing wall, the first electrode lead-out piece comprising the first connecting plate accommodated in the casing, at least a portion of the first tab being stacked and connected with the first connecting plate in the first direction;
in the third direction, the dimension of the first tab is L₁ mm, the dimension of the first connecting plate is L₄ mm, and L₁/L₄ is from 0.6 to 1; alternatively, L₁/L₄ is from 0.8 to 0.9;
the first direction, the second direction, and the third direction are mutually perpendicular.

15. The battery cell according to any one of claims 1 to 14, further comprising the first electrode lead-out piece arranged on the first casing wall, the first electrode lead-out piece comprising:
the first connecting plate accommodated in the casing, at least a portion of the first tab being located on a side of the first connecting plate faced away from the first casing wall and connected to the first connecting plate;
a second connecting plate extending from an end of the first connecting plate adjacent to the body part toward the first casing wall;
a third connecting plate connected to an end of the second connecting plate away from the first connecting plate and located between the first casing wall and the first connecting plate;
a first electrode terminal connected to the third connecting plate and passing through the first casing wall; and
a first terminal plate located on a side of the first casing wall faced away from the first tab and connected to the first electrode terminal.

16. The battery cell according to claim 15, wherein the first terminal plate comprises a first terminal portion and a second terminal portion, the first terminal portion being connected to the first electrode terminal, the second terminal portion protruding from a surface of the first terminal portion faced away from the first casing wall.

17. The battery cell according to any one of claims 1 to 16, comprising an insulating bracket accommodated in the casing and provided relative to the body part in the second direction; wherein
a first accommodating recess is provided on a side of the insulating bracket facing the body part;
at least a portion of the first tab extends into the first accommodating recess and is bent within the first accommodating recess.

18. The battery cell according to claim 17, further comprising the first electrode lead-out piece provided on the first casing wall;
in the first direction, a portion of the insulating bracket is located between the first electrode lead-out piece and the first casing wall.

19. The battery cell according to any one of claims 1 to 18, further comprising the first electrode lead-out piece and an insulating member, wherein the first electrode lead-out piece is provided on the first casing wall and electrically connected to the first tab, and the insulating member is configured to electrically insulate the electrode lead-out piece from the first casing wall.

20. The battery cell according to any one of claims 1 to 19, wherein the first casing wall is provided with a pressure relief mechanism; in the first direction, the pressure relief mechanism does not overlap with the body part.

21. The battery cell according to claim 20, wherein a minimum distance H₁ between the pressure relief mechanism and an edge of the first casing wall is from 2 mm to 5 mm.

22. The battery cell according to claim 20 or 21, wherein the first casing wall is provided with a liquid injection hole, and a minimum distance H₂ between the pressure relief mechanism and the liquid injection hole is greater than or equal to 1 mm.

23. The battery cell according to any one of claims 1 to 22, wherein an AC internal resistance of the battery cell is smaller than or equal to 1 milliohm.

24. The battery cell according to any one of claims 1 to 23, wherein the second casing wall is made of aluminum or steel, and the first casing wall is made of aluminum or steel.

25. The battery cell according to any one of claims 1 to 24, wherein the electrode assembly comprises a plurality of first pole pieces and a plurality of second pole pieces, polarity of the first pole piece being opposite to the polarity of the second pole piece, the plurality of first pole pieces and the plurality of second pole pieces being alternately stacked in the first direction;
the first pole piece comprises a first current collector and a first active substance layer coated on a surface of the first current collector, the second pole piece comprises a second current collector and a second active substance layer coated on a surface of the second current collector;
the body part comprises a portion of the first current collector coated with the first active substance layer, a portion of the second current collector coated with the second active substance layer, the first active substance layer, and the second active substance layer, and the first tab comprises a portion of the first current collector not coated with the first active substance layer.

26. The battery cell according to any one of claims 1 to 25, wherein the casing comprises a housing and a cover plate provided in the first direction, the housing having an opening, the cover plate covering the opening;
the housing comprises the second casing wall, and the cover plate comprises the first casing wall.

27. The battery cell according to claim 26, wherein the surface of the cover plate facing the housing is provided with a positioning groove, and a portion of the body part is accommodated in the positioning groove.

28. A battery, comprising the plurality of battery cells according to any one of claims 1 to 27.

29. An electrical device, comprising the battery according to claim 28, wherein the battery is used for supplying electric energy.
